(19) **Europäisches Patentamt / European Patent Office / Office européen des brevets**

(11) **EP 4 645 444 A1**

(12) **EUROPEAN PATENT APPLICATION**
published in accordance with Art. 153(4) EPC

(43) Date of publication:
**05.11.2025 Bulletin 2025/45**

(21) Application number: **23911388.9**

(22) Date of filing: **06.11.2023**

(51) International Patent Classification (IPC):
**H01M 4/139** (2010.01)        **H01M 4/13** (2010.01)
**H01M 4/64** (2006.01)        **H01M 4/66** (2006.01)
**H01M 4/70** (2006.01)        **H01M 50/531** (2021.01)
**H01M 50/536** (2021.01)

(52) Cooperative Patent Classification (CPC):
**H01M 4/13; H01M 4/139; H01M 4/64; H01M 4/66;
H01M 4/70; H01M 50/531; H01M 50/536;**
Y02E 60/10

(86) International application number:
**PCT/JP2023/039888**

(87) International publication number:
**WO 2024/142604 (04.07.2024 Gazette 2024/27)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **27.12.2022 JP 2022210541**

(71) Applicant: **TOYOTA JIDOSHA KABUSHIKI
KAISHA
Toyota-shi
Aichi 471-8571 (JP)**

(72) Inventors:
• **MIMURA, Tetsuya**
  **Toyota-shi, Aichi 471-8571 (JP)**
• **IKEDA, Takenori**
  **Toyota-shi, Aichi 471-8571 (JP)**
• **YAMAKITA, Masashi**
  **Toyota-shi, Aichi 471-8571 (JP)**
• **MORIYAMA, Satoshi**
  **Toyota-shi, Aichi 471-8571 (JP)**

(74) Representative: **D Young & Co LLP
3 Noble Street
London EC2V 7BQ (GB)**

(54) **ELECTRODE MANUFACTURING METHOD, MANUFACTURING SYSTEM, AND ELECTRODE**

(57)    A method of producing an electrode comprises (a) to (c) below: (a) preparing a base sheet; (b) preparing an active material film; and (c) affixing the active material film to the base sheet by passing the base sheet and the active material film through a roll gap. The base sheet includes a first region and a second region. An arithmetic mean roughness of the second region is greater than an arithmetic mean roughness of the first region. The second region is adjacent to the first region. In the (c), the active material film adheres selectively to the first region among the first region and the second region.

EP 4 645 444 A1

FIG.1

**Description**

TECHNICAL FIELD

The present disclosure relates to a method of producing an electrode, a production system, and an electrode.

BACKGROUND ART

Japanese Patent Laying-Open No. 2012-228649 (PTL 1) discloses an application apparatus.

CITATION LIST

PATENT LITERATURE

PTL 1: Japanese Patent Laying-Open No. 2012-228649

SUMMARY OF INVENTION

TECHNICAL PROBLEM

Typically, an electrode includes a base sheet and an active material film. An active material film may also be referred to as "an active material layer", "a composite material layer", and the like, for example. The active material film is affixed to the base sheet.
An electrode may include a coated area and a non-coated area. The coated area refers to a portion of the surface of the base sheet where the active material film is disposed. The non-coated area refers to a portion of the surface of the base sheet where the active material film is not disposed. The non-coated area is adjacent to the coated area. The non-coated area may be used for connection between the base sheet and a current-collecting member, for example.
At the boundary between the coated area and the non-coated area (namely, at an end portion of the active material film), the shape of the active material film tends to be irregular. It is because operation of an application apparatus tends to become intermittent at this portion. The application mode to alternately form a coated area and a non-coated area may also be referred to as discontinuous application.
There is another method suggested for forming a coated area and a non-coated area by continuous application, which is specifically as follows. A mask is affixed to a part of a base sheet in advance. All over the base sheet, a continuous active material film is formed. The mask and the active material film formed on the mask are peeled off, and thereby a non-coated area may be formed.
In this case, in consideration of peeling off the mask later, it is required to make an adjustment so that the mask does not excessively adhere to the base sheet. However, as a result of this, a gap may be formed between the mask and the base sheet. If a coating material (an active material) enters into the gap, the shape of the end portion of the active material film may become irregular. In addition, the end portion of the active material film can become chipped at the time of mask peeling, and this may also cause irregularities in shape.
The present disclosure aims at enhancing shape precision at an end portion of an active material film.

SOLUTION TO PROBLEM

Hereinafter, the technical configuration and effects of the present disclosure will be described. It should be noted that the action mechanism according to the present specification includes presumption. The action mechanism does not limit the technical scope of the present disclosure.

1. A method of producing an electrode comprises (a) to (c) below:

(a) preparing a base sheet;
(b) preparing an active material film; and
(c) affixing the active material film to the base sheet by passing the base sheet and the active material film through a roll gap.

The base sheet includes a first region and a second region. An arithmetic mean roughness of the second region is greater than an arithmetic mean roughness of the first region. The second region is adjacent to the first region. In the (c), the active material film adheres selectively to the first region among the first region and the second region.

The base sheet includes a first region (a smooth surface) and a second region (a rough surface). The arithmetic mean roughness (surface roughness) of the rough surface is greater than the arithmetic mean roughness of the smooth surface. According to a novel finding of the present disclosure, the active material film may selectively adhere to the smooth surface. It may occur as a result of the difference in surface roughness as well as the consequent difference in contact area and adhesion force. When the active material film adheres selectively to the smooth surface, shape precision at the end portion of the active material film (at the boundary between the smooth surface and the rough surface) is expected to be enhanced. In addition, because the need for a mask is eliminated, process is expected to be simplified and cost is expected to be reduced.

2. In the method of producing an electrode according to "1" above, a ratio of the arithmetic mean roughness of the second region to the arithmetic mean roughness of the first region may be 100 or more, for example.

In the following, the "ratio of the arithmetic mean roughness of the second region to the arithmetic mean roughness of the first region" is also called a "roughness ratio". When the roughness ratio is 100 or more, shape precision is expected to be enhanced.

3. In the method of producing an electrode according to "1" or "2" above, the (b) may include (b1) and (b2) below, for example:

(b1) preparing wet powder including an active material and a binder; and
(b2) shaping the wet powder into the active material film.

As a coating material (a precursor of the active material film), slurry, wet powder, dry powder, and/or the like may be used. Slurry refers to a dispersion system where powder (solid) is dispersed in dispersion medium (liquid). Wet powder refers to a dispersion system where liquid droplets (liquid) are dispersed in powder (solid). Dry powder is substantially free of liquid. Slurry is in the form of liquid. When slurry is used, because it is highly fluid, the end portion of the coating film tends to be irregular in shape (namely, "liquid flow-out" tends to occur). Wet powder is in the form of powder. Wet powder tends to be less fluid than slurry. An active material film including wet powder tends not to be irregular in shape. In addition, wet powder tends to have high lubrication properties (formability) as compared to dry powder. Therefore, when wet powder is used, shape precision is expected to be enhanced.

4. In the method of producing an electrode according to any one of "1" to "3" above, the (a) may include carrying out surface roughening of the base sheet to form the second region. The surface roughening may include pressing a surface-roughening roll against the base sheet. A surface of the surface-roughening roll has at least one smooth surface and at least one rough surface.

When a surface-roughening roll including a smooth surface and a rough surface is used, a base sheet including a first region (a smooth surface) and a second region (a rough surface) may be produced in a continuous fashion.

5. In the method of producing an electrode according to any one of "1" to "4" above, the base sheet may have a belt-like planar shape. In a length direction of the base sheet, the first region and the second region may be alternately positioned.

When the first region and the second region are alternately positioned, non-coated areas may be formed in a discontinuous fashion by continuous application (continuous affixation). In other words, discontinuous application with high shape precision may be achieved.

6. The method of producing an electrode according to any one of "1" to "5" above may further comprise (d) below: (d) joining a current-collecting member to the second region by ultrasonic joining.

The current-collecting member may form a path for electric current between the electrode and an external terminal. The current-collecting member may also serve as an external terminal. When the current-collecting member is joined to the second region (the rough surface), joining strength is expected to be enhanced.

7. A production system produces an electrode by affixing an active material film to a base sheet.

The production system includes a surface-roughening apparatus, a transferring apparatus, and an affixing apparatus. The surface-roughening apparatus is configured to carry out surface roughening of a portion of the base sheet. The transferring apparatus is configured to transfer the base sheet from the surface-roughening apparatus to the affixing apparatus. The affixing apparatus is configured to affix the active material film to the base sheet by passing the base sheet and the active material film through a roll gap.

The production system according to "7" above is capable of implementing the method of producing an electrode according to "1" above.

8. The production system according to "7" above may further include a collecting apparatus. The collecting apparatus is configured to collect a remainder of the active material film that was not affixed to the base sheet.

The active material film thus collected may be reused as the raw material of wet powder, for example. With the active material film being reused, material efficiency is expected to be enhanced, for example.

9. In the production system according to "7" or "8" above, the surface-roughening apparatus may include a surface-roughening roll. A surface of the surface-roughening roll has at least one smooth surface and at least one rough surface.

The production system according to "9" above is capable of implementing the method of producing an electrode according to "4" above.

10. An electrode comprises a base sheet, an active material film, and a current-collecting member. The base sheet includes a first region and a second region. An arithmetic mean roughness of the second region is greater than an arithmetic mean roughness of the first region. The second region is adjacent to the first region. The active material film includes an active material and a binder. The active material film is positioned on the first region. The current-collecting member is joined to the second region.

The electrode according to "10" above may be produced by the method of producing an electrode according to "1" above. An end portion of the active material film may have high shape precision.

11. In the electrode according to "10" above, a relationship of an expression (1-1) below may be satisfied.

$$Ra_1 < 0.5D < Ra_2 \qquad (1-1)$$

In the expression (1-1), $Ra_1$ represents the arithmetic mean roughness of the first region. $Ra_2$ represents the arithmetic mean roughness of the second region. 0.5D represents 0.5 times an average diameter of the active material.

When the relationship of the expression (1-1) is satisfied, shape precision is expected to be enhanced.

12. In the electrode according to "10" or "11" above, the arithmetic mean roughness of the first region may be 0.5 $\mu$m or less, for example. The arithmetic mean roughness of the second region may be from 5 to 15 $\mu$m, for example.

When the arithmetic mean roughness of the first region and the second region falls within the above-mentioned ranges, respectively, shape precision is expected to be enhanced.

13. The electrode according to "10" to "12" above may include the following structure, for example. In a plan view, a boundary between the first region and the second region extends in the shape of a straight line. The active material film includes an end region. The end region extends along the boundary. In a direction orthogonal to the boundary, a largest distance between the end region and the boundary may be 1.5 mm or less.

The largest distance between the end region and the boundary in the direction orthogonal to the boundary may serve as an index of shape precision. Hereinafter, this largest distance is also called a "precision index". The smaller the precision index is, the higher the shape precision is considered to be. For example, the precision index of the electrode according to "10" above may be 1.5 mm or less. On the other hand, in an electrode produced by a conventional discontinuous application (mask peeling), the precision index may be 3 mm or more.

14. The electrode according to any one of "10" to "13" above may include the following structure, for example. In a cross-sectional view, the end region includes an upper surface, a side surface, and a bottom surface. The bottom surface is in contact with the base sheet. The upper surface is a surface opposite to the bottom surface. The side surface connects the bottom surface to the upper surface. An angle formed by the side surface and the bottom surface is from 45 to 90 degrees.

The angle formed by the side surface and the bottom surface (an acute angle) may also be referred to as an angle of inclination. When the active material film is formed with the use of a highly-fluid coating material such as slurry, for example, the coating film ends up spreading too far. This phenomenon may also be referred to as "liquid flow-out". When "liquid flow-out" occurs, the angle of inclination may become smaller. When a low-fluid coating material such as wet powder is used, for example, the angle of inclination may become 45 degrees or more.

15. In the electrode according to any one of "10" to "14" above, the active material film may satisfy a relationship of an expression (1-2) below, for example.

$$0.8 \leq \alpha/\beta \leq 1.5 \qquad (1-2)$$

In the expression (1-2), $\alpha$ represents a mass concentration of a particular element in an upper portion, and the particular element is derived from the binder. $\beta$ represents a mass concentration of the particular element in a lower portion. The upper portion and the lower portion are defined as two equal parts formed by dividing the active material film into half in a thickness direction. The lower portion is located between the upper portion and the base sheet.

For example, when the active material film is formed with the use of a coating material including a large amount of liquid, such as slurry, at the time when the coating material is being dried, the binder moves to the surface layer of the coating film together with the liquid. This phenomenon may also be referred to as "binder migration". Due to binder migration, the binder ends up being unevenly distributed, locally present in the surface layer of the active material film. Uneven distribution of the binder can cause degradation of adhesion strength between the active material film and the base sheet. Uneven distribution of the binder can also cause a rise of battery resistance. From the viewpoints of adhesion strength of the active material film as well as battery resistance, it is desirable that the degree of uneven distribution of the binder in the thickness direction of the active material film be small.

For example, when a coating material including a small amount of liquid, such as wet powder, is used, binder migration may be reduced. "$\alpha/\beta$" in the expression (1-2) may also be referred to as a migration index. The closer the migration index is to 1, the smaller the degree of uneven distribution of the binder in the thickness direction of the active material film is considered to be. In an active material film formed with the use of slurry, the migration index may be from 2 to 3, for example. In an active material film formed with the use of wet powder, the migration index may be from 0.8 to 1.5, for example.

Next, an embodiment of the present disclosure (which may also be simply called "the present embodiment" hereinafter) and an example of the present disclosure (which may also be simply called "the present example" hereinafter) will be described. It should be noted that neither the present embodiment nor the present example limits the technical scope of the present disclosure. The present embodiment and the present example are illustrative in any respect. The present embodiment and the present example are non-restrictive. The technical scope of the present disclosure encompasses any modifications within the meaning and the scope equivalent to the terms of the claims. For example, it is originally planned that certain configurations of the present embodiment and the present example can be optionally combined.

BRIEF DESCRIPTION OF DRAWINGS

Fig. 1 is a schematic flowchart illustrating a method of producing an electrode according to the present embodiment.

Fig. 2 is a conceptual view illustrating a production system according to the present embodiment.

Fig. 3 is a schematic plan view illustrating a base sheet according to the present embodiment.

Fig. 4 is a schematic plan view illustrating an example of an electrode according to the present embodiment.

Fig. 5 is a schematic cross-sectional view illustrating an example of an electrode according to the present embodiment.

Fig. 6 is a conceptual view for explaining a precision index.

Fig. 7 is a conceptual view for explaining a migration index.

Fig. 8 is a conceptual view illustrating a battery according to the present embodiment.

Fig. 9 is Table 1 showing a first battery configuration.

Fig. 10 is Table 2 showing a second battery configuration.

Fig. 11 is Table 3 showing a third battery configuration.

Fig. 12 is a first graph showing shape precision.

Fig. 13 is a second graph showing shape precision.

Fig. 14 is a graph showing battery performance.

DESCRIPTION OF EMBODIMENTS

<<Terms and Definitions, etc.>>

A description of some of the terms used in the specification will be provided. Terms that are not described here may be defined and/or described in the specification every time the term is used.

Expressions such as "comprise", "include", and "have", and other similar expressions (such as "be composed of", for example) are open-ended expressions. In an open-ended expression, in addition to an essential component, an additional component may or may not be further included. The expression "consist of" is a closed-end expression. However, even when a closed-end expression is used, impurities present under ordinary circumstances as well as an additional element irrelevant to the technique according to the present disclosure are not excluded. The expression "consist essentially of" is a semiclosed-end expression. A semiclosed-end expression tolerates addition of an element that does not substantially affect the fundamental, novel features of the technique according to the present disclosure.

Expressions such as "may" and "can" are not intended to mean "must" (obligation) but rather mean "there is a possibility" (tolerance).

Regarding a plurality of steps, operations, processes, and the like that are included in various methods, the order for implementing those things is not limited to the described order, unless otherwise specified. For example, a plurality of steps may proceed simultaneously. For example, a plurality of steps may be implemented in reverse order.

"At least one of A and B" includes "A or B" and "A and B". "At least one of A and B" may also be expressed as "A and/or B".

A singular form also includes its plural meaning, unless otherwise specified. For example, "a particle" may mean not only "one particle" but also "a plurality of particles (a particle group)" and "a group of particles (powder)".

Any geometric term (such as "parallel", "vertical", and "orthogonal", for example) should not be interpreted solely in its exact meaning. For example, "parallel" may mean a geometric state that is deviated, to some extent, from exact "parallel". Any geometric term herein may include tolerances and/or errors in terms of design, operation, production, and/or the like. The dimensional relationship in each figure may not necessarily coincide with the actual dimensional relationship. The dimensional relationship (in length, width, thickness, and the like) in each figure may have been changed for the purpose of assisting understanding for the readers. Further, a part of a given configuration may have been omitted.

The expression "in a plan view" refers to when a target object is viewed in a direction parallel to the thickness direction of the target object. The expression "in a cross-sectional view" refers to when a target object is viewed in a direction orthogonal to the thickness direction of the target object. "Main face" refers to one of the outer surfaces of a target object (for example, a hexahedron) that has the largest area.

A numerical range such as "from m to n%" includes both the upper limit and the lower limit, unless otherwise specified. That is, "from m to n%" means a numerical range of "not less than m% and not more than n%". Moreover, "not less than m% and not more than n%" includes "more than m% and less than n%". Further, any numerical value selected from a certain numerical range may be used as a new upper limit or a new lower limit. For example, any numerical value from a certain numerical range may be combined with any numerical value described in another location of the present specification or in a table or a drawing to set a new numerical range.

All the numerical values are regarded as being modified by the term "about". The term "about" may mean $\pm 5\%$, $\pm 3\%$, $\pm 1\%$, and/or the like, for example. Each numerical value may be an approximate value that can vary depending on the implementation configuration of the technique according to the present disclosure. Each numerical value may be expressed in significant figures. Unless otherwise specified, each measured value may be the average value obtained from multiple measurements performed. The number of measurements may be 3 or more, or may be 5 or more, or may be 10 or more. Generally, the greater the number of measurements is, the more reliable the average value is expected to be. Each measured value may be rounded off based on the number of the significant figures. Each measured value may include an error occurring due to an identification limit of the measurement apparatus, for example.

A stoichiometric composition formula represents a typical example of a compound. A compound may have a non-stoichiometric composition. For example, "$Al_2O_3$" is not limited to a compound where the ratio of the amount of substance (molar ratio) is "Al/O=2/3". "$Al_2O_3$" represents a compound that includes Al and O in any ratio of the amount of substance, unless otherwise specified. Further, the compound may be doped with a trace element, or some of Al and/or O may be replaced by another element, for example.

"Derivative" refers to a compound that is derived from its original compound by at least one partial modification selected from the group consisting of substituent introduction, atom replacement, oxidation, reduction, and other chemical reactions. The position of modification may be one position, or may be a plurality of positions. "Substituent" may include, for example, at least one selected from the group consisting of alkyl group, alkenyl group, alkynyl group, cycloalkyl group, unsaturated cycloalkyl group, aromatic group, heterocyclic group, halogen atom (F, Cl, Br, I, etc.), OH group, SH group, CN group, SCN group, OCN group, nitro group, alkoxy group, unsaturated alkoxy group, amino group, alkylamino group, dialkylamino group, aryloxy group, acyl group, alkoxycarbonyl group, acyloxy group, aryloxycarbonyl group, acylamino group, alkoxycarbonylamino group, aryloxy carbonylamino group, sulfonylamino group, sulfamoyl group, carbamoyl group, alkylthio group, arylthio group, sulfonyl group, sulfinyl group, ureido group, phosphoramide group, sulfo group, carboxy group, hydroxamic acid group, sulfino group, hydrazino group, imino group, silyl group, and the like. These substituents may be further substituted. When there are two or more substituents, these substituents may be the same as one another or may be different from each other. A plurality of substituents may be bonded together to form a ring. A derivative of a polymer compound (a resin material) may also be called "a modified product".

"Copolymer" includes at least one selected from the group consisting of unspecified-type, statistical-type, random-type, alternating-type, periodic-type, block-type, and graft-type.

"Arithmetic mean roughness" refers to the "arithmetic mean roughness Ra" specified in "JIS B 0601". The arithmetic mean roughness may be measured with a non-contact surface roughness meter. The unit of the arithmetic mean roughness is micrometer [μm].

"D50" refers to a particle size in volume-based particle size distribution at which the cumulative frequency accumulated from the small particle size side reaches 50%. D50 of an active material and the like may be measured by laser diffraction. D50 of wet powder may be measured by Test sieving specified in "JIS Z 8815".

"Solid concentration" refers to the total mass fraction of all the non-liquid components in a coating material (for example, wet powder). It should be noted that the binder that is dissolved in liquid is regarded as a non-liquid component.

"Electrode" collectively refers to a positive electrode and a negative electrode. Accordingly, "electrode active material" collectively refers to a positive electrode active material and a negative electrode active material, for example. "Electrode active material layer" collectively refers to a positive electrode active material layer and a negative electrode active material layer, for example. An electrode may refer to at least one of a positive electrode and a negative electrode. An electrode may refer to a bipolar electrode.

"Coating weight" refers to the mass of a coating film (an electrode active material layer) per unit area.

"Average diameter" refers to the average value of the Feret diameter of an active material (a particle group) in a cross section of an active material film. "Feret diameter" is measured under a microscope. The Feret diameter refers to the distance between two points located farthest apart from each other on the outline of a particle. The arithmetic mean of 100 or more Feret diameters is regarded as the average diameter.

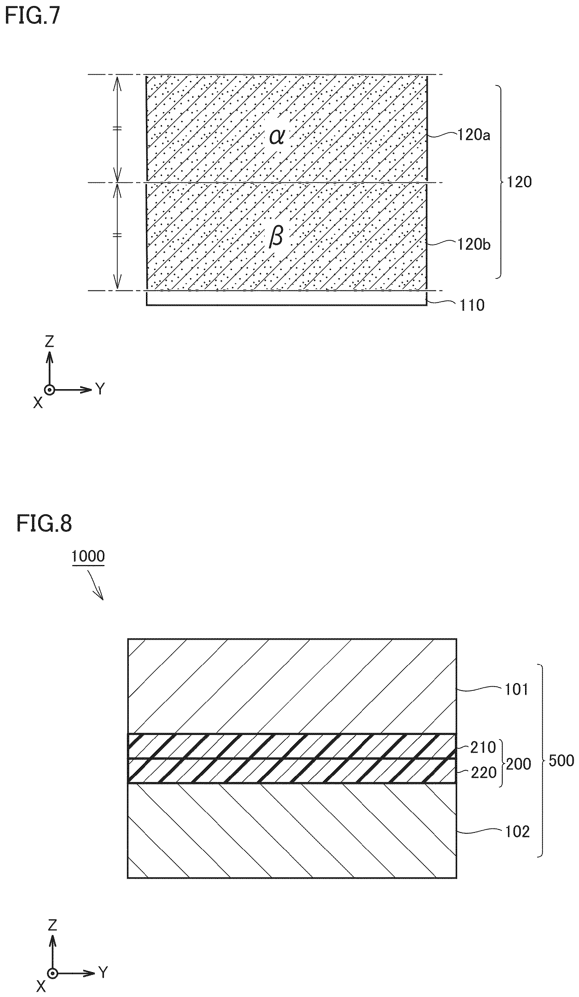

"Migration index" is measured by the procedure described below. From an electrode, a sample is cut out. The cut surface of the sample is parallel to the thickness direction of an active material film. The cut surface of the active material film is subjected to cross-section machining. For example, an ion milling apparatus may be used to carry out the cross-section machining. The sample is analyzed with an electron probe micro analyzer (EPMA). Fig. 7 is a conceptual view for explaining a migration index. In the sample, an active material film 120 is divided in the thickness direction into two equal parts, and thereby the active material film is split into an upper portion 120a and a lower portion 120b. Lower portion 120b is located between upper portion 120a and a base sheet 110. Depending the type of a binder, a particular element is selected. The particular element is an element that may serve as a marker of the binder. For example, when the binder includes polyvinylidene difluoride (PVdF), F may be selected as the particular element. When the binder does not include an adequate element, a known staining treatment may be carried out to the sample to give a particular element to the binder. When the binder includes styrenebutadiene rubber (SBR), for example, the sample may be stained with Os and/or the like, for example. When the binder includes carboxymethylcellulose (CMC), for example, the sample may be stained with Ru and/or the like, for example. By concentration mapping analysis with EPMA, the mass concentration ($\alpha$) of the particular element in upper portion 120a and the mass concentration ($\beta$) of the particular element in lower portion 120b are measured. $\alpha$ is divided by $\beta$, and thereby the migration index ($\alpha/\beta$) is determined.

"Battery" includes any battery system. The battery may include a lithium-ion battery, a sodium-ion battery, a nickel-metal hydride battery, and/or the like, for example. The battery is usable for any purpose of use. The purpose of use of the battery may include electric vehicles, electric tools, mobile devices, stationary electric power supplies, and/or the like, for example.

<<Method of Producing Electrode>>

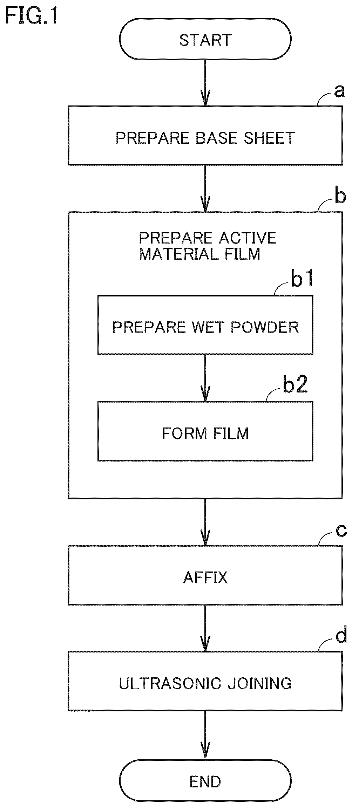

Fig. 1 is a schematic flowchart illustrating a method of producing an electrode according to the present embodiment. In the following, "the method of producing an electrode according to the present embodiment" may be also simply called "the present production method". The present production method includes "(a) preparing a base sheet", "(b) preparing an active material film", and "(c) affixing". The order illustrated in Fig. 1 is merely an example. For example, "(b) preparing an active material film" may be implemented before "(a) preparing a base sheet". Alternatively, "(a) preparing a base sheet" and "(b) preparing an active material film" may be implemented at the same time. The present production method may further include "(d) ultrasonic joining" and the like, for example. The present production method may further include drying, compressing, cutting, and/or the like, for example.

<Production System>

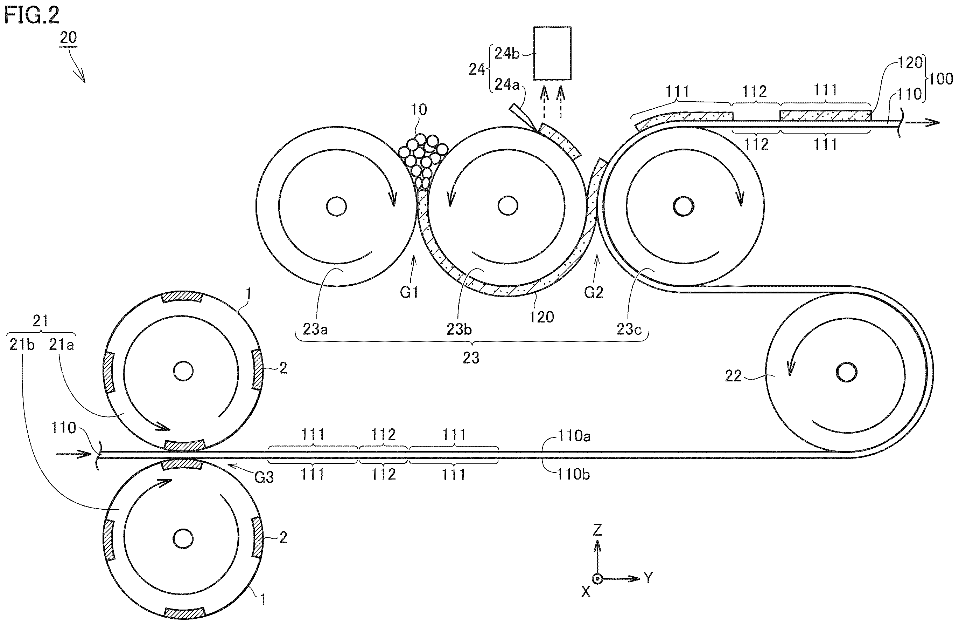

Fig. 2 is a conceptual view illustrating a production system according to the present embodiment. A production system 20 is capable of producing an electrode 100 (a raw sheet) in a roll-to-roll manner. For example, production system 20 is capable of implementing the present production method (see Fig. 1).

Production system 20 includes a surface-roughening apparatus 21, a transferring apparatus 22, and an affixing apparatus 23. Production system 20 may further include a collecting apparatus 24 and/or the like, for example. Production system 20 may further include a control apparatus, a drying apparatus, a compressing apparatus, a cutting apparatus, and/or the like, for example. The individual apparatuses of production system 20 may be separated from each other and independent of each other. The plurality of apparatuses may constitute a single-piece apparatus. Each curved arrow in Fig. 2 represents the direction of rotation of the roll member.

<(a) Preparing Base Sheet>

The present production method includes preparing base sheet 110. Base sheet 110 includes a first main face 110a and a second main face 110b (see Fig. 2). Second main face 110b is a surface opposite to first main face 110a. The thickness of base sheet 110 is not particularly limited. The thickness of base sheet 110 may be from 5 to 100 $\mu$m, for example. The thickness of base sheet 110 may be from 5 to 20 $\mu$m, or may be from 20 to 50 $\mu$m, or may be from 50 to 100 $\mu$m, for example.

Base sheet 110 may be electrically conductive. Inside the battery, base sheet 110 may function as a current collector. Base sheet 110 may include metal, resin, and/or the like, for example. Base sheet 110 may include a metal foil sheet, an electrically-conductive resin sheet, and/or the like, for example. The metal foil sheet may include at least one selected from the group consisting of Al, Mn, Cu, Ni, Ti, Fe, and Cr, for example. The metal foil sheet may include at least one selected from the group consisting of an Al foil sheet, an Al alloy foil sheet, a Ni foil sheet, a Ni alloy foil sheet, a Cu foil sheet, a Cu alloy foil sheet, a Ti foil sheet, a Ti alloy foil sheet, and a stainless steel foil sheet, for example. The electrically-conductive resin sheet may include a matrix resin, an electrically-conductive filler, and the like, for example. The matrix resin may include polyethylene (PE) and/or the like, for example. The electrically-conductive filler may include metal powder, carbon powder, and/or the like, for example. Base sheet 110 may have either a monolayer structure or a multilayer structure. For example, two or more metal foil sheets may be stacked together to form base sheet 110. For example, an Al foil sheet and a Cu foil sheet may be bonded together to prepare base sheet 110 (a current collector) for a bipolar battery.

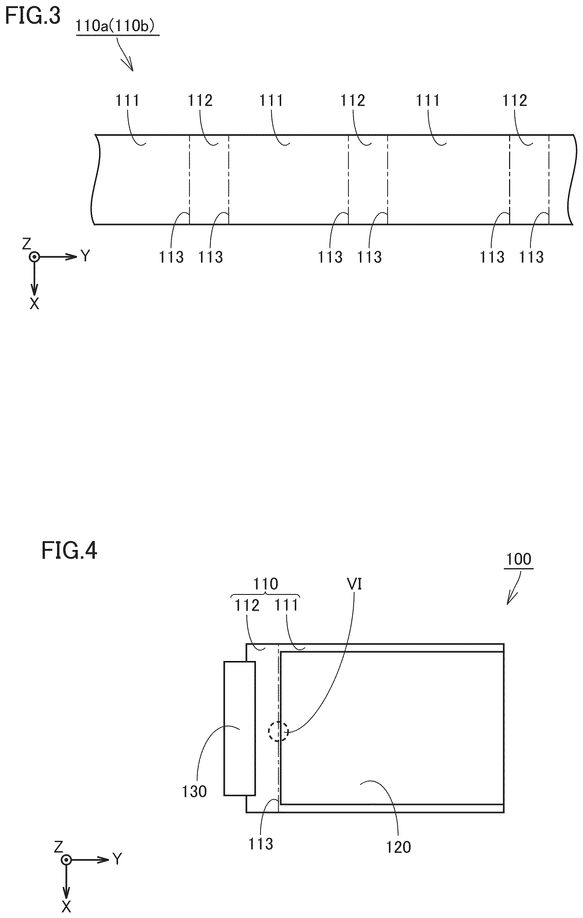

Fig. 3 is a schematic plan view illustrating a base sheet according to the present embodiment. At least one of first main face 110a and second main face 110b includes a first region 111 and a second region 112. Within first region 111, a coated area may be formed. Second region 112 is a region that is to become a non-coated area. Second region 112 is adjacent to first region 111. For example, second region 112 may surround first region 111.

Base sheet 110 may have a belt-like (long oblong) planar shape. Base sheet 110 may include a plurality of first regions 111 and a plurality of second regions 112. In the length direction of base sheet 110 (namely, in the Y-axis direction), first regions 111 and second regions 112 may be alternately positioned. Second regions 112 may be or may not be positioned at regular intervals.

A pair of first region 111 and second region 112 adjacent to each other may correspond to a single electrode (a piece). Between first region 111 and second region 112, a boundary 113 is drawn. Boundary 113 extends in the width direction (in the X-axis direction). The width direction is orthogonal to the length direction. Boundary 113 may extend in the shape of a straight line. Base sheet 110 may be transferred in the length direction. The length direction of base sheet 110 and the direction in which the work is transferred may be parallel to each other.

First region 111 is made of a smooth surface. Second region 112 is made of a rough surface. The arithmetic mean roughness of second region 112 is greater than the arithmetic mean roughness of first region 111. For example, the arithmetic mean roughness of the regions and the D50 of the active material may satisfy the relationship of the following expression (1-3).

$$Ra_1 < 0.5D50 < Ra_2 \qquad (1\text{-}3)$$

In the above expression, $Ra_1$ represents the arithmetic mean roughness of first region 111. $Ra_2$ represents the arithmetic mean roughness of second region 112. 0.5D50 represents 0.5 times the D50 of the active material.

The roughness ratio ($Ra_1/Ra_2$) may be 2 or more, or 5 or more, or 10 or more, or 50 or more, or 100 or more, or 200 or more, for example. The roughness ratio ($Ra_1/Ra_2$) may be 1000 or less, or 500 or less, or 300 or less, for example.

$Ra_1$ may be 0.5 $\mu$m or less, or 0.3 $\mu$m or less, or 0.2 $\mu$m or less, or 0.1 $\mu$m or less, or 0.05 $\mu$m or less, for example.

$Ra_2$ may be 5 $\mu$m or more, or 7.5 $\mu$m or more, or 10 $\mu$m or more, for example. $Ra_2$ may be 20 $\mu$m or less, or 15 $\mu$m or less, or 12.5 $\mu$m or less, for example.

D50 of the active material may be from 1 to 30 $\mu$m, or may be from 5 to 20 $\mu$m, or may be from 10 to 20 $\mu$m, or may be from 5 to 10 $\mu$m, for example.

Second region 112 (a rough surface) may be formed by any method. For example, at least one selected from the group consisting of surface roughening, laser machining, blasting, and chemical etching may be carried out to roughen a portion of base sheet 110.

For example, second region 112 may be formed by surface roughening (such as roll embossing and/or knurling). When roll machining is adopted, productivity is expected to be enhanced, for example. Surface-roughening apparatus 21 is capable of implementing surface roughening, for example (see Fig. 2). Surface-roughening apparatus 21 may include a first surface-roughening roll 21a, for example. The surface of first surface-roughening roll 21a has at least one smooth surface 1 and at least one rough surface 2. Rough surface 2 includes depressions and protrusions (imprints). The depressions and the protrusions may be formed by laser engraving, for example. The pattern of the depressions and the protrusions may be either orderly or random.

First surface-roughening roll 21a in rotation is continuously pressed against base sheet 110 (first main face 110a), and thereby rough surfaces may be formed on first main face 110a in a discontinuous fashion. In other words, in the length direction of base sheet 110, first regions 111 (smooth surfaces) and second regions 112 (rough surfaces) may be alternately formed.

Surface-roughening apparatus 21 may further include a second surface-roughening roll 21b. For example, second surface-roughening roll 21b may have the same structure as first surface-roughening roll 21a. For example, between first surface-roughening roll 21a and second surface-roughening roll 21b, a third roll gap G3 may be formed. Base sheet 110 is passed through third roll gap G3, and thereby rough surfaces may be formed on both the first main face 110a and the second main face 110b.

<(b) Preparing Active Material Film>

The present production method includes preparing active material film 120. Active material film 120 is a film that includes an active material. Active material film 120 may be formed by any method. For example, active material film 120 may be formed by application of slurry, dry powder, and/or the like. For example, the present production method may include "(b1) preparing wet powder", "(b2) forming a film", and the like.

<<(b1) Preparing Wet Powder>>

The present production method may include preparing a wet powder 10 that includes an active material and a binder, for example. Wet powder 10 may be prepared by wet granulation, for example. More specifically, wet powder 10 may be formed by mixing an active material, a binder, and liquid together in a stirring granulation apparatus, for example. The wet powder may be in the form of clay, powder, granules, and/or the like, for example. Wet powder 10 may have a D50 from 0.01 to 0.1 mm, or from 0.1 to 1 mm, or from 1 to 3 mm, for example.

The solid concentration is regulated so as to be suitable for forming wet powder 10. The solid concentration may be 80% or more, or 85% or more, or 90% or more. The solid concentration may be less than 100%, or 99% or less, or 95% or less, or 90% or less, for example. Slurry may have a solid concentration of 70% or less, for example. The range of the solid concentration at which wet powder 10 may be formed may vary depending on the powder properties of the active material, and the like, for example.

The active material causes electrode reactions to occur inside the battery. The active material is in the form of powder. The active material may be either a positive electrode active material or a negative electrode active material. The binder is capable of fixing active material film 120 to base sheet 110.

The liquid may form liquid linkage between the particles, to facilitate granulation. The liquid may be selected depending on the type of the binder and/or the like, for example. The liquid may include an aqueous solvent, an organic solvent, and/or the like, for example. The aqueous solvent includes water. In addition to water, the aqueous solvent may further include a polar organic solvent miscible with water. In addition to water, the aqueous solvent may further include an alcohol, a ketone, and/or the like, for example. The liquid may include at least one selected from the group consisting of N-methylpyrrolidone (NMP), water, tetralin, and butyl butyrate, for example.

A component other than the active material, the binder, and the liquid may be further added to the wet powder. For example, a conductive material, a solid electrolyte, and/or the like may further be added. The chemical composition of the solid components is explained in the <Positive Electrode> and <Negative Electrode> sections below.

<<(b2) Forming Film>>

The present production method may include shaping wet powder 10 into active material film 120, for example. Active material film 120 may be formed by roll shaping, for example. More specifically, active material film 120 may be formed by passing wet powder 10 through a roll gap.

For example, affixing apparatus 23 may also serve as a film-forming apparatus. When affixing apparatus 23 also serves as a film-forming apparatus, the size of production system 20 may be reduced. Affixing apparatus 23 may include a first roll 23a, a second roll 23b, and a third roll 23c, for example. The rotation direction of second roll 23b is opposite to the rotation direction of first roll 23a. The rotation direction of third roll 23c is opposite to the rotation direction of second roll 23b. Between first roll 23a and second roll 23b, a first roll gap G1 is formed. Between second roll 23b and third roll 23c, a second roll gap G2 is formed. For example, the rotational speeds of the rolls may satisfy the relationship of the following expression (1-4).

$$\omega 1 < \omega 2 < \omega 3 \qquad (1\text{-}4)$$

In the above expression, $\omega 1$ represents the rotational speed of first roll 23a. $\omega 2$ represents the rotational speed of second roll 23b. $\omega 3$ represents the rotational speed of third roll 23c.

The work (wet powder 10, active material film 120) may become taken by one of the pair of rolls that is rotating faster. It may be because the faster the rotational speed is, the larger the contact area between the roll and the work is in a very small time period and thereby the greater the adhesion force becomes.

Wet powder 10 is supplied into first roll gap G1. At first roll gap G1, wet powder 10 is compacted, and thereby active material film 120 may be formed. The thickness of active material film 120 may be regulated by changing the size of first roll gap G1, for example. The width of active material film 120 may be regulated by placing a scraper (not illustrated), a divider (not illustrated), and/or the like at first roll gap G1, such as, for example, at each end in the width direction.

Active material film 120 may be taken by second roll 23b. The arithmetic mean roughness of first roll 23a may be from 0 to 10 $\mu$m, for example. The arithmetic mean roughness of second roll 23b may be from 0 to 10 $\mu$m, for example.

<(c) Affixing>

The present production method includes affixing active material film 120 to base sheet 110 by passing base sheet 110 and active material film 120 through a roll gap. Active material film 120 is affixed to both the first region 111 and the second region 112 across the boundary 113 that lies between first region 111 and second region 112. Active material film 120 may be continuously affixed to base sheet 110, for example.

In the present production method, active material film 120 adheres selectively to first region 111 among first region 111 and second region 112. For example, in the case where active material film 120 is made to be affixed to first region 111 and second region 112 under the same conditions, when the coating weight (a first coating weight) of active material film 120 adhered to first region 111 is greater than the coating weight (a second coating weight) of active material film 120 adhered to second region 112, it is considered that active material film 120 has adhered selectively to first region 111. The ratio of the second coating weight to the first coating weight may be 0.1 or less, or 0.01 or less, or 0.001 or less, or 0.0001 or less, for example. The second coating weight may be substantially zero.

For example, affixing apparatus 23 may affix active material film 120 to base sheet 110 (see Fig. 2). Second roll 23b is capable of supplying active material film 120 into second roll gap G2. Transferring apparatus 22 is capable of supplying base sheet 110 into second roll gap G2. In other words, transferring apparatus 22 is capable of transferring base sheet 110 from surface-roughening apparatus 21 to affixing apparatus 23. Transferring apparatus 22 may include a roll feeder and/or the like, for example.

At second roll gap G2, active material film 120 is affixed to base sheet 110. Active material film 120 may selectively adhere to first region 111. Substantially, active material film 120 may not adhere to second region 112. As a result, active material film 120 may be provided on base sheet 110 in a discontinuous fashion.

A portion of active material film 120 corresponding to second region 112 may remain on second roll 23b and become discharged out of second roll gap G2. For example, the present production method may include collecting a remainder of active material film 120 that was not affixed to base sheet 110. For example, collecting apparatus 24 may collect the remainder. Collecting apparatus 24 may include a scraper 24a and a sucking apparatus 24b, for example. Scraper 24a is capable of peeling active material film 120 from second roll 23b. Active material film 120 (remainder) thus peeled off may be collected by sucking apparatus 24b. The remainder thus collected may be reused. For example, the remainder after pulverization may be mixed with wet powder 10. When the remainder is reused, material efficiency is expected to be enhanced.

Active material film 120 is formed on first main face 110a in a discontinuous fashion, and thereby electrode 100 (a raw sheet) may be produced. In the same manner as in the case of first main face 110a, active material film 120 may also be affixed to second main face 110b. The dimensions of first region 111 (a smooth surface) on first main face 110a may be the same as, or may be different from, those on second main face 110b. The dimensions of second region 112 (a rough surface) on first main face 110a may be the same as, or may be different from, those on second main face 110b. The dimensions of active material film 120 on first main face 110a may be the same as, or may be different from, those on second main face 110b. The polarity of active material film 120 on first main face 110a may be the same as, or may be different from, that on second main face 110b. In other words, electrode 100 may be a bipolar electrode.

<Other Processes>

The present production method may include drying the electrode 100. For example, a hot-air drying apparatus, an infrared drying apparatus, and/or the like may be used to dry the active material film 120. Active material film 120 may be air dried.

The present production method may include compressing the electrode 100. For example, the dried electrode 100 may be compressed. For example, electrode 100 may be compressed with a rolling apparatus.

The present production method may include cutting the electrode 100 (a raw sheet). The raw sheet may be cut into a certain size to suit the battery design. For example, electrode 100 may be cut within first region 111 (a coated area), or electrode 100 may be cut within second region 112 (a non-coated area). The cutting line may be parallel to the width direction of electrode 100, or may be parallel to the length direction of electrode 100, for example.

<(d) Ultrasonic Joining>

The present production method may include joining a current-collecting member 130 to second region 112 (a rough surface) by ultrasonic joining. Current-collecting member 130 may include a current collector plate, a current-collecting tab, a current-collecting lead, and/or the like, for example. Current-collecting member 130 may include Al, Ni, Cu, and/or the like, for example. When current-collecting member 130 is joined to second region 112, joining strength is expected to be enhanced.

<<Electrode>>

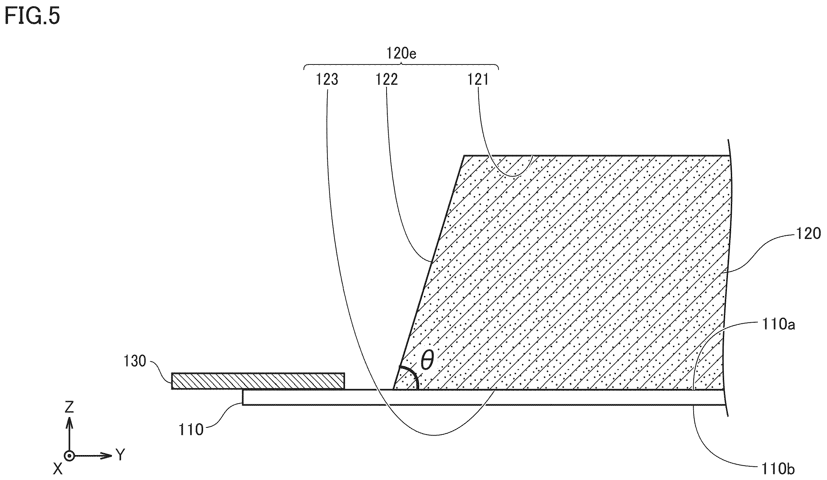

Fig. 4 is a schematic plan view illustrating an example of an electrode according to the present embodiment. Fig. 5 is a schematic cross-sectional view illustrating an example of an electrode according to the present embodiment. The planar shape of electrode 100 is not particularly limited. In a plan view, electrode 100 may be in the form of a sheet (rectangular) or may be in the form of a belt, for example.

Electrode 100 includes base sheet 110, active material film 120, and current-collecting member 130 (see Fig. 4). Each of the components may have any planar shape. In a plan view, each of active material film 120 and base sheet 110 may be rectangular (see Fig. 4), for example.

Base sheet 110 is a current collector. Base sheet 110 includes first main face 110a and second main face 110b (see Fig. 5). Active material film 120 is placed on first main face 110a (one side). Active material film 120 may be placed on both the first main face 110a and the second main face 110b.

Base sheet 110 includes first region 111 and second region 112. Active material film 120 is placed on first region 111. Active material film 120 may cover the entire first region 111. Active material film 120 may partially cover first region 111. Second region 112 is a non-coated area. At second region 112, base sheet 110 is exposed. To second region 112, current-collecting member 130 is joined. In addition, a non-coated area may or may not be provided to each end in the width direction (in the X-axis direction).

<Arithmetic Mean Roughness>

Electrode 100 may satisfy the relationship of the following expression (1-1), for example.

$$Ra_1 < 0.5D < Ra_2 \qquad (1\text{-}1)$$

In the expression (1-1), $Ra_1$ represents the arithmetic mean roughness of first region 111. $Ra_2$ represents the arithmetic mean roughness of second region 112. 0.5D represents 0.5 times the average diameter of the active material. When the relationship of the expression (1-1) is satisfied, shape precision is expected to be enhanced.

$Ra_1$ may be 0.5 $\mu$m or less, for example. $Ra_1$ may be 0.3 $\mu$m or less, or 0.2 $\mu$m or less, or 0.1 $\mu$m or less, or 0.05 $\mu$m or less, for example.

$Ra_2$ may be from 5 to 15 $\mu$m, for example. $Ra_2$ may be 7.5 $\mu$m or more, or 10 $\mu$m or more, for example. $Ra_2$ may be 20 $\mu$m or less, or 15 $\mu$m or less, or 12.5 $\mu$m or less, for example.

The average diameter of the active material may be from 1 to 30 $\mu$m, or may be from 5 to 20 $\mu$m, or may be from 10 to 20 $\mu$m, or may be from 5 to 10 $\mu$m, for example. The average diameter of the active material can be substantially the same as D50 of the active material.

<Shape Precision>

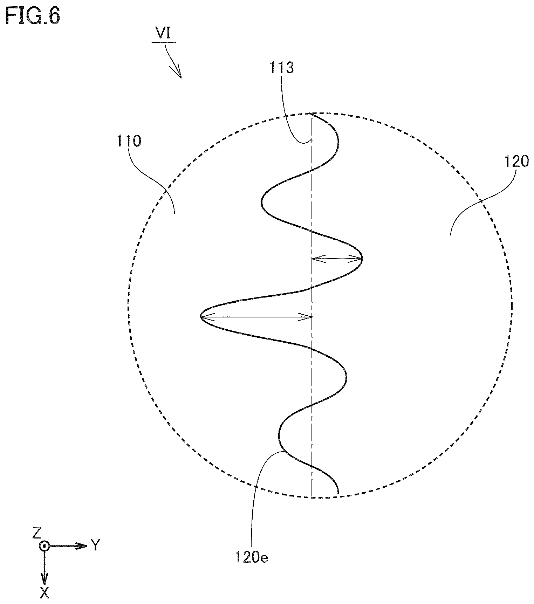

Fig. 6 is a conceptual view for explaining a precision index. The region VI in Fig. 6 corresponds to the region VI in Fig. 4. In a plan view, boundary 113 between first region 111 and second region 112 extends in the shape of a straight line. Active material film 120 includes an end region 120e. End region 120e extends along the boundary 113. End region 120e may be protruded and recessed in the direction orthogonal to boundary 113 (namely, in the Y-axis direction). The largest distance between end region 120e and boundary 113 in the Y-axis direction (the distance between boundary 113 and a point farthest from it) is the precision index. The smaller the precision index is, the higher the shape precision is considered to be. The precision index may be 1.5 mm or less, for example. The precision index may be 1.2 mm or less, or 1.0 mm or less, or 0.8 mm or less, or 0.6 mm or less, or 0.4 mm or less, for example.

Usually, the greater the width of active material film 120 (the dimension in the X-axis direction) is, the lower the shape precision tends to be. In the present embodiment, even when the width of active material film 120 is great, high shape precision may be maintained. For example, the precision index may be 1.5 mm or less for a width of 100 mm or more, or 200 mm or more, or 500 mm or more, or 1000 mm or more.

<Angle of Inclination>

In a cross-sectional view, end region 120e includes an upper surface 121, a side surface 122, and a bottom surface 123 (see Fig. 5). Bottom surface 123 is in contact with base sheet 110. Upper surface 121 is the surface opposite to bottom surface 123. Upper surface 121 may be parallel to bottom surface 123. Side surface 122 connects bottom surface 123 to upper surface 121. The angle formed by side surface 122 and bottom surface 123 (an acute angle) is the angle of inclination ($\theta$). The closer the angle of inclination is to 90 degrees, the higher the shape precision is considered to be. In addition, the closer the angle of inclination is to 90 degrees, the more enhanced the energy density is expected to be, for example. The angle of inclination may be from 45 to 90 degrees, for example. The angle of inclination may be from 45 to 60 degrees, or from 60 to 75 degrees, or from 75 to 90 degrees, for example.

<Migration Index>

In the present embodiment, the degree of uneven distribution of the binder in the thickness direction of active material film 120 is expected to be small. More specifically, active material film 120 may satisfy the relationship of the following expression (1-2), for example.

$$0.8 \leq \alpha/\beta \leq 1.5 \qquad (1\text{-}2)$$

In the above expression, $\alpha$ represents the mass concentration of a particular element derived from the binder in upper portion 120a (see Fig. 7). $\beta$ represents the mass concentration of the particular element in lower portion 120b. Upper portion 120a and lower portion 120b are defined as two equal parts formed by dividing active material film 120 into half in the thickness direction. Lower portion 120b is located between upper portion 120a and base sheet 110.

The expression (1-2) shows that the migration index is from 0.8 to 1.5. The migration index may be 1.4 or less, or 1.3 or less, or 1.2 or less, or 1.1 or less, or 1.05 or less, for example. The migration index may be 0.9 or more, or 0.95 or more, or 1 or more, for example.

<<Battery>>

Fig. 8 is a conceptual view illustrating a battery according to the present embodiment. A battery 1000 may be a liquid-type battery, a polymer battery, or an all-solid-state battery, for example. Battery 1000 may be either a monopolar battery (a unipolar battery) or a bipolar battery, for example. In Fig. 8, a monopolar battery is illustrated as an example.

<Exterior Package>

Battery 1000 may include an exterior package (not illustrated). The exterior package may accommodate a power generation element 500. The exterior package may have any configuration. The exterior package may be a case made of metal, or a pouch made of a metal foil laminated film, for example. The exterior package may be cylindrical, prismatic, button-shaped, flat, and/or the like, for example. The exterior package may include Al and/or the like, for example.

<Power Generation Element>

Battery 1000 includes power generation element 500. Power generation element 500 may also be referred to as "an electrode group", "an electrode assembly", and the like, for example. Power generation element 500 includes a first electrode 101, a separator 200, a second electrode 102, and an electrolyte (not illustrated). For example, each component may be impregnated with a liquid electrolyte. For example, each component may include a solid electrolyte.

For example, power generation element 500 may be a stack-type one. For example, first electrode 101 and second electrode 102 may be alternately stacked together with separator 200 interposed between first electrode 101 and second electrode 102, to form power generation element 500. For example, power generation element 500 may be a wound-type one. For example, first electrode 101 having a belt-like shape, separator 200 having a belt-like shape, and second electrode 102 having a belt-like shape may be stacked together to form a stack. The resulting stack may be wound spirally to form power generation element 500. After being wound, the wound power generation element 500 may be shaped into a flat form.

The polarity of second electrode 102 is opposite to the polarity of first electrode 101. When first electrode 101 is a positive electrode, second electrode 102 is a negative electrode. When first electrode 101 is a negative electrode, second electrode 102 is a positive electrode. At least one of first electrode 101 and second electrode 102 is the above-described electrode 100. Separator 200 is interposed between first electrode 101 and second electrode 102. Separator 200 separates first electrode 101 from second electrode 102.

<Positive Electrode>

The positive electrode includes base sheet 110 and active material film 120. Active material film 120 of the positive electrode may also be referred to as "a positive electrode active material layer", for example. The positive electrode active material layer may have a thickness from 10 to 1000 $\mu$m, or from 50 to 500 $\mu$m, or from 100 to 300 $\mu$m, for example. The positive electrode active material layer may have a coating weight from 5 to 100 mg/cm$^2$, or from 10 to 50 mg/cm$^2$, or from 20 to 40 mg/cm$^2$, for example. The positive electrode active material layer may have a density from 2 to 5 g/cm$^3$, or from 2.5 to 4 g/cm$^3$, or from 3 to 3.5 g/cm$^3$, for example. The density of an electrode active material layer may also be referred to as "a composite material density". The positive electrode active material layer includes a positive electrode active material. The positive electrode active material layer may further include a conductive material, a binder, and/or the like, for example.

<<Conductive Material>>

The conductive material may form an electron conduction path inside the positive electrode active material layer. The amount of the conductive material to be used may be, for example, from 0.1 to 10 parts by mass relative to the amount of the positive electrode active material regarded as 100 parts by mass. The conductive material may include any component. The conductive material may include at least one selected from the group consisting of graphite, acetylene black (AB), Ketjenblack (registered trademark), vapor grown carbon fibers (VGCFs), carbon nanotubes (CNTs), and graphene flakes (GFs), for example.

<<Binder>>

The binder is capable of fixing the positive electrode active material layer to a current collector (base sheet 110). The amount of the binder to be used may be, for example, from 0.1 to 10 parts by mass relative to 100 parts by mass of the positive electrode active material. The binder may include any component. The binder may include, for example, at least one selected from the group consisting of PVdF, vinylidene difluoride-hexafluoropropylene copolymer (PVdF-HFP), polytetrafluoroethylene (PTFE), CMC, polyacrylic acid (PAA), polyvinyl alcohol (PVA), polyvinylpyrrolidone (PVP), polyoxyethylene alkyl ether, and derivatives of these.

<<Other Components>>

The positive electrode active material layer may further include an inorganic filler, an organic filler, a solid electrolyte, a surface modifier, a dispersant, a lubricant, a flame retardant, a protective agent, a flux, a coupling agent, an adsorbent, and/or the like, for example. The positive electrode active material layer may include polyoxyethylene allylphenyl ether phosphate, zeolite, silane coupling agent, $MoS_2$, $WO_3$, and/or the like, for example.

<<Positive Electrode Active Material>>

The positive electrode active material gives rise to positive electrode reactions. The positive electrode active material may have a D50 from 1 to 30 $\mu$m, or from 10 to 20 $\mu$m, or from 1 to 10 $\mu$m, for example. The positive electrode active material may include any component. The positive electrode active material may include a transition metal oxide, a polyanion compound, and/or the like, for example. In a single particle (positive electrode active material), the composition may be uniform, or may be non-uniform. For example, there may be a gradient in the composition from the surface of the particle toward the center. The composition may change continuously, or may change non-continuously (in steps).

<Transition Metal Oxide: Space Group R-3m>

The transition metal oxide may have any crystal structure. For example, the transition metal oxide may include a crystal structure that belongs to a space group R-3m and/or the like. For example, a compound represented by the general formula "LiMO$_2$" may have a crystal structure that belongs to a space group R-3m. The transition metal oxide may be represented by the following formula (2-1), for example.

$$Li_{1-a}Ni_xM_{1-x}O_2 \qquad (2\text{-}1)$$

In the above formula, the relationships of $-0.5 \leq a \leq 0.5$ and $0 \leq x \leq 1$ are satisfied.

M may include, for example, at least one selected from the group consisting of Co, Mn, and Al.

In the above formula (2-1), x may satisfy the relationship of $0 < x \leq 0.1$, $0.1 \leq x \leq 0.2$, $0.2 \leq x \leq 0.3$, $0.3 \leq x \leq 0.4$, $0.4 \leq x \leq 0.5$, $0.5 \leq x \leq 0.6$, $0.6 \leq x \leq 0.7$, $0.7 \leq x \leq 0.8$, $0.8 \leq x \leq 0.9$, or $0.9 \leq x \leq 1$, for example. a may satisfy the relationship of $-0.4 \leq a \leq 0.4$, $-0.3 \leq a \leq 0.3$, $-0.2 \leq a \leq 0.2$, or $-0.1 \leq a \leq 0.1$, for example.

The transition metal oxide may include, for example, at least one selected from the group consisting of $LiCoO_2$, $LiMnO_2$, $LiNi_{0.9}Co_{0.1}O_2$, $LiNi_{0.9}Mn_{0.1}O_2$, and $LiNiO_2$.

<NCM>

The transition metal oxide may be represented by the following formula (2-2), for example. A compound represented by the following formula (2-2) may also be called "NCM".

$$Li_{1-a}Ni_xCo_yMn_zO_2 \qquad (2\text{-}2)$$

In the above formula, the relationships of $-0.5 \leq a \leq 0.5$, $0 < x < 1$, $0 < y < 1$, $0 < z < 1$, and $x+y+z=1$ are satisfied.

In the above formula (2-2), x may satisfy the relationship of $0 < x \leq 0.1$, $0.1 \leq x \leq 0.2$, $0.2 \leq x \leq 0.3$, $0.3 \leq x \leq 0.4$, $0.4 \leq x \leq 0.5$, $0.5 \leq x \leq 0.6$, $0.6 \leq x \leq 0.7$, $0.7 \leq x \leq 0.8$, $0.8 \leq x \leq 0.9$, or $0.9 \leq x < 1$, for example.

In the above formula (2-2), y may satisfy the relationship of $0 < y \leq 0.1$, $0.1 \leq y \leq 0.2$, $0.2 \leq y \leq 0.3$, $0.3 \leq y \leq 0.4$, $0.4 \leq y \leq 0.5$, $0.5 \leq y \leq 0.6$, $0.6 \leq y \leq 0.7$, $0.7 \leq y \leq 0.8$, $0.8 \leq y \leq 0.9$, or $0.9 \leq y < 1$, for example.

In the above formula (2-2), z may satisfy the relationship of $0 < z \leq 0.1$, $0.1 \leq z \leq 0.2$, $0.2 \leq z \leq 0.3$, $0.3 \leq z \leq 0.4$, $0.4 \leq z \leq 0.5$, $0.5 \leq z \leq 0.6$, $0.6 \leq z \leq 0.7$, $0.7 \leq z \leq 0.8$, $0.8 \leq z \leq 0.9$, or $0.9 \leq z < 1$, for example.

NCM may include, for example, at least one selected from the group consisting of $LiNi_{1/3}Co_{1/3}Mn_{1/3}O_2$, $LiNi_{0.4}Co_{0.3}Mn_{0.3}O_2$, $LiNi_{0.3}Co_{0.4}Mn_{0.3}O_2$, $LiNi_{0.3}Co_{0.3}Mn_{0.4}O_2$, $LiNi_{0.5}Co_{0.2}Mn_{0.3}O_2$, $LiNi_{0.5}Co_{0.3}Mn_{0.2}O_2$, $LiNi_{0.5}Co_{0.4}Mn_{0.1}O_2$, $LiNi_{0.5}Co_{0.1}Mn_{0.4}O_2$, $LiNi_{0.6}Co_{0.2}Mn_{0.2}O_2$, $LiNi_{0.6}Co_{0.3}Mn_{0.1}O_2$, $LiNi_{0.6}Co_{0.1}Mn_{0.3}O_2$, $LiNi_{0.7}Co_{0.1}Mn_{0.2}O_2$, $LiNi_{0.7}Co_{0.2}Mn_{0.1}O_2$, $LiNi_{0.8}Co_{0.1}Mn_{0.1}O_2$, and $LiNi_{0.9}Co_{0.05}Mn_{0.05}O_2$.

<NCA>

The transition metal oxide may be represented by the following formula (2-3), for example. A compound represented by the following formula (2-3) may also be called "NCA".

$$Li_{1-a}Ni_xCo_yAl_zO_2 \qquad (2\text{-}3)$$

In the above formula, the relationships of $-0.5 \leq a \leq 0.5$, $0 < x < 1$, $0 < y < 1$, $0 < z < 1$, and $x+y+z=1$ are satisfied.

In the above formula (2-3), x may satisfy the relationship of $0 < x \leq 0.1$, $0.1 \leq x \leq 0.2$, $0.2 \leq x \leq 0.3$, $0.3 \leq x \leq 0.4$, $0.4 \leq x \leq 0.5$, $0.5 \leq x \leq 0.6$, $0.6 \leq x \leq 0.7$, $0.7 \leq x \leq 0.8$, $0.8 \leq x \leq 0.9$, or $0.9 \leq x < 1$, for example.

In the above formula (2-3), y may satisfy the relationship of $0 < y \leq 0.1$, $0.1 \leq y \leq 0.2$, $0.2 \leq y \leq 0.3$, $0.3 \leq y \leq 0.4$, $0.4 \leq y \leq 0.5$, $0.5 \leq y \leq 0.6$, $0.6 \leq y \leq 0.7$, $0.7 \leq y \leq 0.8$, $0.8 \leq y \leq 0.9$, or $0.9 \leq y < 1$, for example.

In the above formula (2-3), z may satisfy the relationship of $0 < z \leq 0.1$, $0.1 \leq z \leq 0.2$, $0.2 \leq z \leq 0.3$, $0.3 \leq z \leq 0.4$, $0.4 \leq z \leq 0.5$, $0.5 \leq z \leq 0.6$, $0.6 \leq z \leq 0.7$, $0.7 \leq z \leq 0.8$, $0.8 \leq z \leq 0.9$, or $0.9 \leq z < 1$, for example.

NCA may include, for example, at least one selected from the group consisting of $LiNi_{0.7}Co_{0.1}Al_{0.2}O_2$, $LiNi_{0.7}Co_{0.2}Al_{0.1}O_2$, $LiNi_{0.8}Co_{0.1}Al_{0.1}O_2$, $LiNi_{0.8}Co_{0.17}Al_{0.03}O_2$, $LiNi_{0.8}Co_{0.15}Al_{0.05}O_2$, and $LiNi_{0.9}Co_{0.05}Al_{0.05}O_2$.

<Multi-Component System>

The positive electrode active material may include two or more NCMs and/or the like, for example. The positive electrode active material may include NCM ($0.6 \leq x$) and NCM ($x < 0.6$), for example. "NCM ($0.6 \leq x$)" refers to a compound in which x (Ni ratio) in the above formula (2-2) is 0.6 or more. NCM ($0.6 \leq x$) may also be called "a high-nickel material", for example. NCM ($0.6 \leq x$) includes $LiNi_{0.8}Co_{0.1}Mn_{0.1}O_2$ and/or the like, for example. "NCM($x < 0.6$)" refers to a compound in which x (Ni ratio) in the above formula (2-2) is less than 0.6. NCM ($x < 0.6$) includes $LiNi_{1/3}Co_{1/3}Mn_{1/3}O_2$ and/or the like, for example. The mixing ratio (mass ratio) between NCM ($0.6 \leq x$) and NCM ($x < 0.6$) may be "NCM ($0.6 \leq x$)/NCM ($x < 0.6$)=9/1 to 1/9", or "NCM ($0.6 \leq x$)/NCM ($x < 0.6$)=9/1 to 4/6", or "NCM ($0.6 \leq x$)/NCM ($x < 0.6$)=9/1 to 3/7", for example.

The positive electrode active material may include NCA and NCM, for example. The mixing ratio (mass ratio) between NCA and NCM may be "NCA/NCM=9/1 to 1/9", or "NCA/NCM=9/1 to 4/6", or "NCA/NCM=9/1 to 3/7", for example. Between NCA and NCM, the Ni ratio may be the same or may be different. The Ni ratio of NCA may be more than the Ni ratio of NCM. The Ni ratio of NCA may be less than the Ni ratio of NCM.

<Transition Metal Oxide: Space Group C2/m>

The transition metal oxide may include a crystal structure that belongs to a space group C2/m and/or the like, for example. The transition metal oxide may be represented by the following formula (2-4), for example.

$$\text{Li}_2\text{MO}_3 \qquad (2\text{-}4)$$

In the above formula, M may include, for example, at least one selected from the group consisting of Ni, Co, Mn, and Fe.

The positive electrode active material may include a mixture of $\text{LiMO}_2$ (space group R-3m) and $\text{Li}_2\text{MO}_3$ (space group C2/m), for example. The positive electrode active material may include a solid solution that is formed of $\text{LiMO}_2$ and $\text{Li}_2\text{MO}_3$ ($\text{Li}_2\text{MO}_3$-$\text{LiMO}_2$), and/or the like, for example.

<Transition Metal Oxide: Space Group Fd-3m>

The transition metal oxide may include a crystal structure that belongs to a space group Fd-3m, and/or the like, for example. The transition metal oxide may be represented by, for example, the following formula (2-5).

$$\text{LiMn}_{2\text{-}x}\text{M}_x\text{O}_4 \qquad (2\text{-}5)$$

In the above formula, the relationship of $0 \leq x \leq 2$ is satisfied.

M may include, for example, at least one selected from the group consisting of Ni, Fe, and Zn.

$\text{LiM}_2\text{O}_4$ (space group Fd-3m) may include, for example, at least one selected from the group consisting of $\text{LiMn}_2\text{O}_4$ and $\text{LiMn}_{1.5}\text{Ni}_{0.5}\text{O}_4$. The positive electrode active material may include a mixture of $\text{LiMO}_2$ (space group R-3m) and $\text{LiM}_2\text{O}_4$ (space group Fd-3m), for example. The mixing ratio (mass ratio) between $\text{LiMO}_2$ (space group R-3m) and $\text{LiM}_2\text{O}_4$ (space group Fd-3m) may be "$\text{LiMO}_2/\text{LiM}_2\text{O}_4$=9/1 to 9/1", or "$\text{LiMO}_2/\text{LiM}_2\text{O}_4$=9/1 to 5/5", or "$\text{LiMO}_2/\text{LiM}_2\text{O}_4$=9/1 to 7/3", for example.

<Polyanion Compound>

The polyanion compound may include a phosphoric acid salt (such as $\text{LiFePO}_4$ for example), a silicic acid salt, a boric acid salt, and/or the like, for example. The polyanion compound may be represented by the following formulae (2-6) to (2-9), for example.

$$\text{LiMPO}_4 \qquad (2\text{-}6)$$

$$\text{Li}_{2\text{-}x}\text{MPO}_4\text{F} \qquad (2\text{-}7)$$

$$\text{Li}_2\text{MSiO}_4 \qquad (2\text{-}8)$$

$$\text{LiMBO}_3 \qquad (2\text{-}9)$$

In the above formulae (2-6) to (2-9), M may include, for example, at least one selected from the group consisting of Fe, Mn, and Co. In the above formula (2-7), the relationship of $0 \leq x \leq 2$ may be satisfied, for example.

The positive electrode active material may include a mixture of $\text{LiMO}_2$ (space group R-3m) and the polyanion compound, for example. The mixing ratio (mass ratio) between $\text{LiMO}_2$ (space group R-3m) and the polyanion compound may be "$\text{LiMO}_2$/(polyanion compound)=9/1 to 9/1", or "$\text{LiMO}_2$/(polyanion compound)=9/1 to 5/5", or "$\text{LiMO}_2$/(polyanion compound)=9/1 to 7/3", for example.

<Dopant>

To the positive electrode active material, a dopant may be added. The dopant may be diffused throughout the entire particle, or may be locally distributed. For example, the dopant may be locally distributed on the particle surface. The dopant may be a substituted solid solution atom, or may be an intruding solid solution atom. The amount of the dopant to be added (the molar fraction relative to the total amount of the positive electrode active material) may be from 0.01 to 5%, or may be from 0.1 to 3%, or may be from 0.1 to 1%, for example. A single type of dopant may be added, or two or more types of dopant may be added. The two or more dopants may form a complex.

The dopant may include, for example, at least one selected from the group consisting of B, C, N, a halogen, Si, Na, Mg, Al, Mn, Co, Cr, Sc, Ti, V, Cu, Zn, Ga, Ge, Se, Sr, Y, Zr, Nb, Mo, In, Pb, Bi, Sb, Sn, W, La, Ce, Pr, Nd, Pm, Sm, Eu, Gd, Tb, Dy, Ho, Er, Tm, Yb, Lu, and an actinoid.

For example, to NCA, a combination of "Zr, Mg, W, Sm", a combination of "Ti, Mn, Nb, Si, Mo", or a combination of "Er, Mg" may be added.

For example, to NCM, Ti may be added. For example, to NCM, a combination of "Zr, W", a combination of "Si, W", or a combination of "Zr, W, Al, Ti, Co" may be added.

<Surface Covering>

The positive electrode active material layer may include composite particles. Each composite particle includes a core particle and a covering layer. The core particle includes a positive electrode active material. The covering layer covers at least part of the surface of the core particle. The covering layer may have a thickness from 1 to 3000 nm, or from 5 to 2000 nm, or from 10 to 1000 nm, or from 10 to 100 nm, or from 10 to 50 nm, for example. The thickness of the covering layer may be measured in an SEM (Scanning Electron Microscope) image of a cross section of the particle, and/or the like, for example. More specifically, the composite particle is embedded in a resin material to prepare a sample. With the use of an ion milling apparatus, a cross section of the sample is exposed. For example, an ion milling apparatus with the trade name "ArBlade (registered trademark) 5000" manufactured by Hitachi High-Technologies (or a similar product) may be used. The cross section of the sample is examined by an SEM. For example, an SEM apparatus with the trade name "SU8030" manufactured by Hitachi High-Technologies (or a similar product) may be used. For each of ten composite particles, the thickness of the covering layer is measured in twenty fields of view. The arithmetic mean of a total of 200 thickness measurements is used.

The ratio of the part of the surface of the core particle covered by the covering layer is also called "a covering rate". The covering rate may be 1% or more, or 10% or more, or 30% or more, or 50% or more, or 70% or more, for example. The covering rate may be 100% or less, or 90% or less, or 80% or less, for example.

For example, the covering rate may be measured by XPS (X-ray Photoelectron Spectroscopy). For example, an XPS apparatus with the trade name "PHI X-tool" manufactured by ULVAC-PHI (or a similar product) may be used. A sample powder consisting of the composite particle is loaded in the XPS apparatus. Narrow scan analysis is carried out. The measurement data is processed with an analysis software. For example, an analysis software with the trade name "MulTiPak" manufactured by ULVAC-PHI (or a similar product) may be used. The measurement data is analyzed to detect a plurality of types of elements. From the area of each peak, the ratio of the detected element is determined. By the following equation (2-10), the covering rate is determined.

$$\theta = \{I_1/(I_0+I_1)\} \times 100 \qquad (2\text{-}10)$$

$\theta$: Covering rate [%]
$I_0$: Ratio of element attributable to core particle
$I_1$: Ratio of element attributable to covering layer

For example, when the core particle includes NCM, $I_0$ represents the total ratio of the elements "Ni, Co, Mn". For example, when the core particle includes NCA, $I_0$ represents the total ratio of the elements "Ni, Co, Al". For example, when the covering layer includes P and B, $I_1$ represents the total ratio of the elements "P, B".

The covering layer may include any component. The covering layer may include an elementary substance, organic matter, an inorganic acid salt, an organic acid salt, a hydroxide, an oxide, a carbide, a nitride, a sulfide, a halide, and/or the like, for example. The covering layer may include, for example, at least one selected from the group consisting of B, Al, W, Zr, Ti, Co, F, lithium compound (such as $Li_2CO_3$, $LiHCO_3$, $LiOH$, $Li_2O$, for example), tungsten oxide (such as $WO_3$, for example), titanium oxide (such as $TiO_2$, for example), zirconium oxide (such as $ZrO_2$, for example), boron oxide, boron phosphate (such as $BPO_4$, for example), aluminum oxide (such as $Al_2O_3$, for example), boehmite, aluminum hydroxide, phosphoric acid salt [such as $Li_3PO_4$, $(NH_4)_3PO_4$, $AlPO_4$, for example], boric acid salt (such as $Li_2B_4O_7$, $LiBO_3$, for

example), polyacrylic acid salt (such as Li salt, Na salt, $NH_4$ salt), acetic acid salt (such as Li salt, for example), CMC (such as CMC-Na, CMC-Li, CMC-$NH_4$), $LiNbO_3$, $Li_2TiO_3$, and Li-containing halide (such as $LiAlCl_4$, $LiTiAlF_6$, $LiYBr_6$, $LiYCl_6$, for example).

<Hollow Particles, Solid Particles>

Each of a hollow particle and a solid particle is a secondary particle (an aggregate of primary particles). In a cross-sectional image of "a hollow particle", the proportion of the area of the central cavity relative to the entire cross-sectional area of the particle is 30% or more. The proportion of the cavity in a hollow particle may be 40% or more, or 50% or more, or 60% or more, for example. In a cross-sectional image of "a solid particle", the proportion of the area of the central cavity relative to the entire cross-sectional area of the particle is less than 30%. The proportion of the cavity in a solid particle may be 20% or less, or 10% or less, or 5% or less, for example. The positive electrode active material may be hollow particles, or may be solid particles. A mixture of hollow particles and solid particles may be used. The mixing ratio (mass ratio) between hollow particles and solid particles may be "(hollow particles)/(solid particles)=1/9 to 9/1", or "(hollow particles)/(solid particles)=2/8 to 8/2", or "(hollow particles)/(solid particles)=3/7 to 7/3", or "(hollow particles)/(solid particles)=4/6 to 6/4", for example.

<Large Particles, Small Particles>

The positive electrode active material may have a unimodal particle size distribution (based on the number), for example. The positive electrode active material may have a multimodal particle size distribution, for example. The positive electrode active material may have a bimodal particle size distribution, for example. That is, the positive electrode active material may include large particles and small particles. When the particle size distribution is bimodal, the particle size corresponding to the peak top of the larger particle size is regarded as the particle size of the large particles ($d_L$). The particle size corresponding to the peak top of the smaller particle size is regarded as the particle size of the small particles ($d_S$). The particle size ratio ($d_L/d_S$) may be from 2 to 10, or from 2 to 5, or from 2 to 4, for example. $d_L$ may be from 8 to 20 $\mu$m, or from 8 to 15 $\mu$m, for example. $d_S$ may be from 1 to 10 $\mu$m, or from 1 to 5 $\mu$m, for example.

For example, with the use of a waveform analysis software, peak separating processing may be carried out for the particle size distribution. The ratio between the peak area of the large particles ($S_L$) and the peak area of the small particles ($S_S$) may be "$S_L/S_S$=1/9 to 9/1", or "$S_L/S_S$=5/5 to 9/1", or "$S_L/S_S$=7/3 to 9/1", for example.

The number-based particle size distribution is measured by a microscope method. From the positive electrode active material layer, a plurality of cross-sectional samples are taken. The cross-sectional sample may include a cross section vertical to the surface of the positive electrode active material layer, for example. By ion milling and/or the like, for example, cleaning is carried out to the side that is to be observed. By SEM, the cross-sectional sample is examined. The magnification for the examination is adjusted in such a way that 10 to 100 particles are contained within the examination field of view. The Feret diameters of all the particles in the image are measured. The plurality of the cross-sectional samples are examined to obtain a total of 1000 or more Feret diameters. From the 1000 or more Feret diameters, number-based particle size distribution is created.

The bimodal particle size distribution may be formed by two types of particles mixed together. These two types of particles have different particle size distributions. For example, the two types of particles may have different D50. For example, the large particles may have a D50 from 8 to 20 $\mu$m, or from 8 to 15 $\mu$m. For example, the small particles may have a D50 from 1 to 10 $\mu$m, or from 1 to 5 $\mu$m. The ratio of the D50 of the large particles to the D50 of the small particles may be from 2 to 10, or from 2 to 5, or from 2 to 4, for example. The mixing ratio (mass ratio) between the large particles and the small particles may be "(large particles)/(small particles)=1/9 to 9/1", or "(large particles)/(small particles)=5/5 to 9/1", or "(large particles)/(small particles)=7/3 to 9/1", for example.

The large particles and the small particles may have the same composition, or may have different compositions. For example, the large particles may be NCA and the small particles may be NCM. For example, the large particles may be NCM ($0.6 \leq x$) and the small particles may be NCM ($x < 0.6$). Similarly to the positive electrode active material, a negative electrode active material (described below) may also include large particles and small particles.

<Negative Electrode>

The negative electrode includes base sheet 110 and active material film 120. Active material film 120 of the negative electrode may also be referred to as "a negative electrode active material layer". The negative electrode active material layer may have a thickness from 10 to 1000 $\mu$m, or from 50 to 500 $\mu$m, or from 100 to 300 $\mu$m, for example. The negative electrode active material layer may have a coating weight from 5 to 100 mg/cm$^2$, or from 10 to 50 mg/cm$^2$, or from 10 to 30 mg/cm$^2$, for example. The negative electrode active material layer may have a density from 0.5 to 2 g/cm$^3$, or from 0.8 to 1.8 g/cm$^3$, or from 1.2 to 1.8 g/cm$^3$, or from 1.4 to 1.6 g/cm$^3$, for example. The negative electrode active material layer includes a negative electrode active material. The negative electrode active material layer may further include a conductive material, a binder, and/or the like, for example.

<<Conductive Material>>

The conductive material may form an electron conduction path inside the negative electrode active material layer. The amount of the conductive material to be used may be, for example, from 0.1 to 10 parts by mass relative to 100 parts by mass of the negative electrode active material. The conductive material may include any component. The conductive material may include, for example, at least one selected from the group consisting of AB, Ketjenblack (registered trademark), VGCFs, CNTs, and GFs. The CNTs may include at least one selected from the group consisting of single-walled CNTs (SWCNTs) and multi-walled CNTs (MWCNTs).

<<Binder>>

The binder is capable of fixing the negative electrode active material layer to the current collector (base sheet 110). The amount of the binder to be used may be, for example, from 0.1 to 10 parts by mass relative to 100 parts by mass of the negative electrode active material. The binder may include any component. The binder may include, for example, at least one selected from the group consisting of SBR, acrylate butadiene rubber (ABR), sodium alginate, CMC (such as CMC-H, CMC-Na, CMC-Li, CMC-NH$_4$), PAA (such as PAA-H, PAA-Na, PAA-Li), polyacrylonitrile (PAN), PVdF, PTFE, acrylic-based resin, methacrylic-based resin, PVP, PVA, and derivatives of these. For example, the expression "CMC-Na" refers to a Na salt of CMC. For example, the expression "CMC-H" refers to an acid-type CMC. The same applies to "PAA-Na" and the like.

<<Other Components>>

The negative electrode active material layer may further include an inorganic filler, an organic filler, a solid electrolyte, a surface modifier, a dispersant, a lubricant, a flame retardant, a protective agent, a flux, a coupling agent, an adsorbent, and/or the like, for example. The negative electrode active material layer may include a layered silicate (such as smectite, montmorillonite, bentonite, hectorite), an inorganic filler (such as solid alumina, hollow silica, boehmite), a polysiloxane compound, and/or the like, for example.

<<Negative Electrode Active Material>>

The negative electrode active material gives rise to negative electrode reactions. The negative electrode active material may be in particle form, or may be in sheet form, for example. The negative electrode active material may have a D50 from 1 to 30 $\mu$m, or from 10 to 20 $\mu$m, or from 1 to 10 $\mu$m, for example.

<Carbon-Based Active Material>

The negative electrode active material may include a carbon-based active material, for example. The carbon-based active material may include, for example, at least one selected from the group consisting of graphite, soft carbon, and hard carbon. The "graphite" collectively refers to natural graphite and artificial graphite. The graphite may be a mixture of natural graphite and artificial graphite. The mixing ratio (mass ratio) may be "(natural graphite)/(artificial graphite)=1/9 to 9/1", or "(natural graphite)/(artificial graphite)=2/8 to 8/2", or "(natural graphite)/(artificial graphite)=3/7 to 7/3", for example.

The graphite may include a dopant. The dopant may include, for example, at least one selected from the group consisting of B, N, P, Li, and Ca. The amount thereof to be added in molar fraction may be from 0.01 to 5%, or from 0.1 to 3%, or from 0.1 to 1%, for example.

The surface of the graphite may be covered with amorphous carbon, for example. The surface of the graphite may be covered with another type of material, for example. This another type of material may include, for example, at least one selected from the group consisting of P, W, Al, and O. The another type of material may include, for example, at least one selected from the group consisting of Al(OH)$_3$, AlOOH, Al$_2$O$_3$, WO$_3$, Li$_2$CO$_3$, LiHCO$_3$, and Li$_3$PO$_4$.

<Alloy-Based Active Material>

The negative electrode active material may include an alloy-based active material, for example. The negative electrode active material may include, for example, at least one selected from the group consisting of Si, Li silicate, SiO, Si-based alloy, Sn, SnO, and Sn-based alloy.

SiO may be represented by the following formula (3-1), for example.

$$SiO_x \qquad (3\text{-}1)$$

In the above formula, the relationship of $0<x<2$ is satisfied.

In the above formula (3-1), x may satisfy the relationship of $0.5 \leq x \leq 1.5$ or $0.8 \leq x \leq 1.2$, for example.

Li silicate may include, for example, at least one selected from the group consisting of $Li_4SiO_4$, $Li_2SiO_3$, $Li_2Si_2O_5$, and $Li_8SiO_6$. The negative electrode active material may include a mixture of Si and Li silicate, for example. The mixing ratio (mass ratio) may be "Si/(Li silicate)=1/9 to 9/1", or "Si/(Li silicate)=2/8 to 8/2", or "Si/(Li silicate)=3/7 to 7/3", or "Si/(Li silicate)=4/6 to 6/4", for example.

The alloy-based active material (such as Si, SiO) may include an additive. The additive may be a substituted solid solution atom or an intruding solid solution atom, for example. The additive may be an adherent adhered to the surface of the alloy-based active material. The adherent may be an elementary substance, an oxide, a carbide, a nitride, a halide, and/or the like, for example. The amount thereof to be added in molar fraction may be from 0.01 to 5%, or from 0.1 to 3%, or from 0.1 to 1%, for example. The additive may include, for example, at least one selected from the group consisting of Li, Na, K, Rb, Be, Mg, Ca, Sr, Fe, Ba, B, Al, Ga, In, C, Ge, Sn, Pb, N, P, As, Y, Sb, and S. That is, SiO may be doped with Mg and/or Na. For example, Mg silicate, Na silicate, and/or the like may be formed. For example, boron oxide (such as $B_2O_3$, for example), yttrium oxide (such as $Y_2O_3$, for example), and/or the like may be added to SiO.

<Si-C Composite Material>

The negative electrode active material may include a composite material of the carbon-based active material (such as graphite) and the alloy-based active material (such as Si). A composite material including Si and carbon may also be called "a Si-C composite material". For example, Si microparticles may be dispersed inside carbon particles. For example, Si microparticles may be dispersed inside graphite particles. For example, Li silicate particles may be covered with a carbon material (such as amorphous carbon).

<Other Active Materials>

The negative electrode active material may include, for example, at least one selected from the group consisting of Li metal, Li-based alloy, and $Li_4Ti_5O_{12}$. The negative electrode active material may include a Li foil sheet and/or the like, for example.

<Separator>

Separator 200 is electrically insulating. Separator 200 may include, for example, at least one selected from the group consisting of a resin film, an inorganic particle layer, and an organic particle layer. Separator 200 may include a resin film and an inorganic particle layer, for example.

<<Resin Film>>

The resin film is porous. The resin film may include a microporous film, a nonwoven fabric, and/or the like, for example. The resin film includes a resin skeleton. The resin skeleton may be continuous in mesh form, for example. Gaps in the resin skeleton form pores. The resin film allows a liquid electrolyte to permeate therethrough. The resin film may have an average pore size of 1 $\mu$m or less, for example. The resin film may have an average pore size from 0.01 to 1 $\mu$m, or from 0.1 to 0.5 $\mu$m, for example. "Average pore size" may be measured by mercury porosimetry. The resin film may have a Gurley value from 50 to 250 s/100cm$^3$, for example. "Gurley value" may be measured by a Gurley test method.

The resin film may include, for example, at least one selected from the group consisting of an olefin-based resin, a urethane-based resin, a polyamide-based resin, a cellulose-based resin, a polyether-based resin, an acrylic-based resin, a polyester-based resin, and the like. The resin film may include, for example, at least one selected from the group consisting of PE, polypropylene (PP), polyamide (PA), polyamide-imide (PAI), polyimide (PI), aromatic polyamide (aramid), polyphenylene ether (PPE), and derivatives of these. The resin film may be formed by stretching, phase separation, and/or the like, for example. The resin film may have a thickness from 5 to 50 $\mu$m, or from 10 to 25 $\mu$m, for example.

The resin film may have a monolayer structure. The resin film may consist of a PE layer, for example. A skeleton of a PE layer is formed of PE. The PE layer may have shut-down function. The resin film may have a multilayer structure, for example. The resin film may include a PP layer and a PE layer, for example. A skeleton of a PP layer is formed of PP. The resin film may have a three-layer structure, for example. The resin film may be formed by stacking a PP layer, a PE layer, and a PP layer in this order, for example. The thickness of the PE layer may be from 5 to 20 $\mu$m, for example. The thickness of the PP layer may be from 3 to 10 $\mu$m, for example.

<<Inorganic Particle Layer>>

The inorganic particle layer may be formed on the surface of the resin film. The inorganic particle layer may be formed on only one side of the resin film, or may be formed on both sides of the resin film. The inorganic particle layer may be formed on the side facing the positive electrode active material layer, or may be formed on the side facing the negative electrode active material layer. The inorganic particle layer may be formed on the surface of the positive electrode active material layer, or may be formed on the surface of the negative electrode active material layer.

The inorganic particle layer is porous. The inorganic particle layer includes inorganic particles. The inorganic particles may also be called "an inorganic filler". Gaps between the inorganic particles form pores. The inorganic particle layer may have a thickness from 0.5 to 10 $\mu$m, or from 1 to 5 $\mu$m, for example. The inorganic particles may include a heat-resistant material, for example. The inorganic particle layer that includes a heat-resistant material is also called "HRL (Heat Resistance Layer)". The inorganic particles may include at least one selected from the group consisting of boehmite, alumina, zirconia, titania, magnesia, silica, and the like. The inorganic particles may have any shape. The inorganic particles may be spherical, rod-like, plate-like, fibrous, and/or the like, for example. The inorganic particles may have a D50 from 0.1 to 10 $\mu$m, or from 0.5 to 3 $\mu$m, for example. The inorganic particle layer may further include a binder. The binder may include, for example, at least one selected from the group consisting of an acrylic-based resin, a polyamide-based resin, a fluorine-based resin, an aromatic-polyether-based resin, and a liquid-crystal-polyester-based resin, and the like.

<<Organic Particle Layer>>

Separator 200 may include an organic particle layer, for example. Separator 200 may include an organic particle layer instead of the resin film, for example. Separator 200 may include an organic particle layer instead of the inorganic particle layer, for example. Separator 200 may include both the resin film and an organic particle layer. Separator 200 may include both the inorganic particle layer and an organic particle layer. Separator 200 may include the resin film, the inorganic particle layer, and an organic particle layer.

The organic particle layer may have a thickness from 0.1 to 50 $\mu$m, or from 0.5 to 20 $\mu$m, or from 0.5 to 10 $\mu$m, or from 1 to 5 $\mu$m, for example. The organic particle layer includes organic particles. The organic particles may also be called "an organic filler". The organic particles may include a heat-resistant material. The organic particles may include, for example, at least one selected from the group consisting of PE, PP, PTFE, PI, PAI, PA, aramid, and the like. The organic particles may be spherical, rod-like, plate-like, fibrous, and/or the like, for example. The organic particles may have a D50 from 0.1 to 10 $\mu$m, or from 0.5 to 3 $\mu$m, for example.

Separator 200 may include a mixed layer, for example. The mixed layer includes both inorganic particles and organic particles.

<Liquid Electrolyte>

Battery 1000 may include a liquid electrolyte, for example. The liquid electrolyte may include an electrolyte solution, for example. The electrolyte solution includes a solvent and a solute.

<<Solute>>

The concentration of the solute may be from 0.5 to 1 mol/L, or from 1 to 1.5 mol/L, or from 1.5 to 2 mol/L, or from 2 to 2.5 mol/L, or from 2.5 to 3 mol/L, for example. The solute includes a supporting salt (a Li salt). The solute may include an inorganic acid salt, an imide salt, an oxalato complex, a halide, and/or the like, for example. The solute may include, for example, at least one selected from the group consisting of $LiPF_6$, $LiBF_4$, $LiClO_4$, $LiAsF_6$, $LiSbF_6$, $LiN(SO_2F)_2$ "LiFSI", $LiN(SO_2CF_3)_2$ "LiTFSI", $LiB(C_2O_4)_2$ "LiBOB", $LiBF_2(C_2O_4)$ "LiDFOB", $LiPF_2(C_2O_4)_2$ "LiDFOP", $LiPO_2F_2$, $FSO_3Li$, LiI, LiBr, and derivatives of these.

<<Carbonate-Based Solvent>>

The electrolyte solution may include a carbonate-based solvent (a carbonate-ester-based solvent), for example. The solvent may include a cyclic carbonate, a chain carbonate, a fluorinated carbonate, and/or the like, for example. The solvent may include, for example, at least one selected from the group consisting of ethylene carbonate (EC), propylene carbonate (PC), butylene carbonate (BC), dimethyl carbonate (DMC), diethyl carbonate (DEC), ethyl methyl carbonate (EMC), monofluoroethylene carbonate (FEC), difluoroethylene carbonate, 4,4-difluoroethylene carbonate, trifluoroethylene carbonate, perfluoroethylene carbonate, fluoropropylene carbonate, difluoropropylene carbonate, and derivatives of these.

The solvent may include a cyclic carbonate (such as EC, PC, FEC) and a chain carbonate (such as EMC, DMC, DEC). The mixing ratio (volume ratio) between the cyclic carbonate and the chain carbonate may be "(cyclic carbonate)/(chain carbonate)=1/9 to 4/6", or "(cyclic carbonate)/(chain carbonate)=2/8 to 3/7", or "(cyclic carbonate)/(chain carbonate)=3/7 to 4/6", for example.

The solvent may include a cyclic carbonate (such as EC, PC) and a fluorinated cyclic carbonate (such as FEC). The mixing ratio (volume ratio) between the cyclic carbonate and the fluorinated cyclic carbonate may be "(cyclic carbonate)/(fluorinated cyclic carbonate)=99/1 to 90/10", or "(cyclic carbonate)/(fluorinated cyclic carbonate)=9/1 to 1/9", or "(cyclic carbonate)/(fluorinated cyclic carbonate)=9/1 to 7/3", or "(cyclic carbonate)/(fluorinated cyclic carbonate) =3/7 to 1/9", for example.

The solvent may include EC, FEC, EMC, DMC, and DEC, for example. The volume ratio of these components may satisfy the relationship represented by the following equation (4-1), for example.

$$V_{EC}+V_{FEC}+V_{EMC}+V_{DMC}+V_{DEC}=10 \qquad (4\text{-}1)$$

In the above equation, each of $V_{EC}$, $V_{FEC}$, $V_{EMC}$, $V_{DMC}$, and $V_{DEC}$ represents the volume ratio of EC, FEC, EMC, DMC, and DEC, respectively.

The following relationships are satisfied: $1 \leq V_{EC} \leq 4$, $0 \leq V_{FEC} \leq 3$, $V_{EC}+V_{FEC} \leq 4$, $0 \leq V_{EMC} \leq 9$, $0 \leq V_{DMC} \leq 9$, $0 \leq V_{DEC} \leq 9$, $6 \leq V_{EMC}+V_{DMC}+V_{DEC} \leq 9$.

In the above equation (4-1),

the relationship of $1 \leq V_{EC} \leq 2$ or $2 \leq V_{EC} \leq 3$ may be satisfied, for example;
the relationship of $1 \leq V_{FEC} \leq 2$ or $2 \leq V_{FEC} \leq 4$ may be satisfied, for example;
the relationship of $3 \leq V_{EMC} \leq 4$ or $6 \leq V_{EMC} \leq 8$ may be satisfied, for example;
the relationship of $3 \leq V_{DMC} \leq 4$ or $6 \leq V_{DMC} \leq 8$ may be satisfied, for example; and
the relationship of $3 \leq V_{DEC} \leq 4$ or $6 \leq V_{DEC} \leq 8$ may be satisfied, for example.

The solvent may have a composition of "EC/EMC=3/7", "EC/DMC=3/7", "EC/FEC/DEC=1/2/7", "EC/DMC/EMC=3/4/3", "EC/DMC/EMC=3/3/4", "EC/FEC/DMC/EMC=2/1/4/3", "EC/FEC/DMC/EMC=1/2/4/3", "EC/FEC/DMC/EMC=2/1/3/4", "EC/FEC/DMC/EMC=1/2/3/4" (volume ratio), and/or the like, for example.

<<Ether-Based Solvent>>

The electrolyte solution may include an ether-based solvent. The electrolyte solution may include, for example, at least one selected from the group consisting of tetrahydrofuran (THF), 1,4-dioxane (DOX), 1,3-dioxolane (DOL), 1,2-dimethoxyethane (DME), 1,2-diethoxyethane (DEE), hydrofluoroether (HFE), ethylglyme, triglyme, tetraglyme, and derivatives of these.

<<Additive>>

The electrolyte solution may include any additive. The amount to be added (the mass fraction to the total amount of the electrolyte solution) may be from 0.01 to 5%, or from 0.05 to 3%, or from 0.1 to 1%, for example. The additive may include an SEI (Solid Electrolyte Interphase) formation promoter, an SEI formation inhibitor, a gas generation agent, an overcharging inhibitor, a flame retardant, an antioxidant, an electrode-protecting agent, a surfactant, and/or the like, for example.

The additive may include, for example, at least one selected from the group consisting of vinylene carbonate (VC), vinylethylene carbonate (VEC), 1,3-propane sultone (PS), tert-amylbenzene, 1,4-di-tert-butylbenzene, biphenyl (BP), cyclohexylbenzene (CHB), ethylene sulfite (ES), propane sultone (PS), ethylene sulfate (DTD), γ-butyrolactone, phosphazene compound, carboxylate ester [such as methyl formate (MF), methyl acetate (MA), methyl propionate (MP), diethyl malonate (DEM), for example], fluorobenzene (such as monofluorobenzene (FB), 1,2-difluorobenzene, 1,3-difluorobenzene, 1,4-difluorobenzene, 1,2,3-trifluorobenzene, 1,2,4-trifluorobenzene, 1,3,5-trifluorobenzene, 1,2,3,4-tetrafluorobenzene, 1,2,3,5-tetrafluorobenzene, 1,2,4,5-tetrafluorobenzene, pentafluorobenzene, hexafluorobenzene, for example), fluorotoluene (such as 2-fluorotoluene, 3-fluorotoluene, 4-fluorotoluene, 2,3-difluorotoluene, 2,4-difluorotoluene, 2,5-difluorotoluene, 2,6-difluorotoluene, 3,4-difluorotoluene, octafluorotoluene, for example), benzotrifluoride (such as benzotrifluoride, 2-fluorobenzotrifluoride, 3-fluorobenzotrifluoride, 4-fluorobenzotrifluoride, 2-methylbenzotrifluoride, 3-methylbenzotrifluoride, 4-methylbenzotrifluoride, for example), fluoroxylene (such as 3-fluoro-o-xylene, 4-fluoro-o-xylene, 2-fluoro-m-xylene, 5-fluoro-m-xylene, for example), sulfur-containing heterocyclic compound (such as benzothiazole, 2-methylbenzothiazole, tetrathiafulvalene, for example), nitrile compound (such as adiponitrile, succinonitrile, for example), phosphate (such as trimethyl phosphate, triethyl phosphate, for example), carboxylic anhydride (such as acetic anhydride, propionic anhydride, oxalic anhydride, succinic anhydride, maleic anhydride, phthalic anhydride, benzoic anhydride, for example), alcohol (such as methanol, ethanol, n-propyl alcohol, ethylene glycol, diethylene glycol monomethyl ether, for example), and derivatives of these.

The components described above as the solute and the solvent may be used as a trace component (an additive). The additive may include, for example, at least one selected from the group consisting of $LiBF_4$, LiFSI, LiTFSI, LiBOB, LiDFOB, LiDFOP, $LiPO_2F_2$, $FSO_3Li$, LiI, LiBr, HFE, DOX, PC, FEC, and derivatives of these.

<<Ionic Liquid>>

The liquid electrolyte may include an ionic liquid. The liquid electrolyte may include, for example, at least one selected from the group consisting of a sulfonium salt, an ammonium salt, a pyridinium salt, a piperidinium salt, a pyrrolidinium salt, a morpholinium salt, a phosphonium salt, an imidazolium salt, and derivatives of these.

<Gelled Electrolyte>

Battery 1000 may include a gelled electrolyte, for example. The gelled electrolyte may include a liquid electrolyte and a polymer material. The polymer material may form a polymer matrix. The polymer material may include, for example, at least one selected from the group consisting of PVdF, PVdF-HFP, PAN, PVdF-PAN, polyethylene oxide (PEO), polyethylene glycol (PEG), and derivatives of these.

<Solid Electrolyte>

Battery 1000 may include a solid electrolyte, for example. The solid electrolyte may form an ion conduction path inside the electrode active material layer. The solid electrolyte may be in particle form, for example. The solid electrolyte may have a D50 from 0.1 to 3 $\mu$m, for example. The D50 of the solid electrolyte may be 1 $\mu$m or less, or 0.5 $\mu$m or less, for example. The amount of the solid electrolyte to be used in the electrode active material layer may be, for example, from 1 to 200 parts by volume, or from 50 to 150 parts by volume, or from 50 to 100 parts by volume, relative to 100 parts by volume of the electrode active material.

<<Sulfide Solid Electrolyte>>

The electrode active material layer may include a sulfide solid electrolyte, for example. The sulfide solid electrolyte may be glass ceramic, or may be argyrodite, for example. The sulfide solid electrolyte may include, for example, at least one selected from the group consisting of $LiI\text{-}LiBr\text{-}Li_3PS_4$, $Li_2S\text{-}SiS_2$, $LiI\text{-}Li_2S\text{-}SiS_2$, $LiI\text{-}Li_2S\text{-}P_2S_5$, $LiI\text{-}Li_2O\text{-}Li_2S\text{-}P_2S_5$, $LiI\text{-}Li_2S\text{-}P_2O_5$, $LiI\text{-}Li_3PO_4\text{-}P_2S_5$, $Li_2S\text{-}GeS_2\text{-}P_2S_5$, $Li_2S\text{-}P_2S_5$, $Li_{10}GeP_2S_{12}$, $Li_4P_2S_6$, $Li_7P_3S_{11}$, $Li_3PS_4$, $Li_7PS_6$, and $Li_6PS_5X$ (X=Cl, Br, I).

For example, "$LiI\text{-}LiBr\text{-}Li_3PS_4$" refers to a sulfide solid electrolyte produced by mixing LiI, LiBr, and $Li_3PS_4$ in a freely-selected molar ratio. For example, the sulfide solid electrolyte may be produced by a mechanochemical method. "$Li_2S\text{-}P_2S_5$" includes $Li_3PS_4$. $Li_3PS_4$ may be produced by mixing $Li_2S$ and $P_2S_5$ in "$Li_2S/P_2S_5$=75/25 (molar ratio)", for example.

<<Other Solid Electrolytes>>

The electrode active material layer may further include other solid electrolytes, in addition to the sulfide solid electrolyte. Hereinafter, for the sake of convenience, the sulfide solid electrolyte is also called "a first solid electrolyte", and another solid electrolyte is also called "a second solid electrolyte". The volume ratio of the first solid electrolyte and the second solid electrolyte may be "(first solid electrolyte)/(second solid electrolyte)=1/99 to 99/1", or "(first solid electrolyte)/(second solid electrolyte)=1/9 to 9/1", or "(first solid electrolyte)/(second solid electrolyte)=3/7 to 7/3", for example. The first solid electrolyte and the second solid electrolyte may have been subjected to composing treatment.

The second solid electrolyte may include, for example, at least one selected from the group consisting of a halide solid electrolyte, an oxide solid electrolyte, a hydride solid electrolyte, and a nitride solid electrolyte.

The halide solid electrolyte may be represented by the following formula (5-1), for example.

$$Li_{6-na}M_aX_6 \qquad (5\text{-}1)$$

In the above formula, n represents an oxidation number of M. For example, M may include an atom whose oxidation number is +3. For example, M may include an atom whose oxidation number is +4. M may include, for example, at least one selected from the group consisting of Y, Al, Ti, Zr, Ca, and Mg. a may satisfy the relationship of $0 < a < 2$. X may include, for example, at least one selected from the group consisting of F, Cl, Br, and I.

The halide solid electrolyte may be represented by the following formula (5-2), for example.

$$Li_{3-a}Ti_aAl_{1-a}F_6 \qquad (5-2)$$

In the above formula, the relationship of $0 \leq a \leq 1$ is satisfied. a may satisfy the relationship of $0 \leq a \leq 0.1$, $0.1 \leq a \leq 0.2$, $0.2 \leq a \leq 0.3$, $0.3 \leq a \leq 0.4$, $0.4 \leq a \leq 0.5$, $0.5 \leq a \leq 0.6$, $0.6 \leq a \leq 0.7$, $0.7 \leq a \leq 0.8$, $0.8 \leq a \leq 0.9$, or $0.9 \leq a \leq 1$, for example.

The halide solid electrolyte may be represented by the following formula (5-3), for example.

$$Li_3YCl_aBr_bI_{6-a-b} \qquad (5-3)$$

In the above formula, the relationship of $0 \leq a+b \leq 6$ is satisfied. a may satisfy the relationship of $0 \leq a \leq 1$, $1 \leq a \leq 2$, $2 \leq a \leq 3$, $3 \leq a \leq 4$, $4 \leq a \leq 5$, or $5 \leq a \leq 6$, for example. b may satisfy the relationship of $0 \leq b \leq 1$, $1 \leq b \leq 2$, $2 \leq b \leq 3$, $3 \leq b \leq 4$, $4 \leq b \leq 5$, or $5 \leq b \leq 6$, for example.

The oxide solid electrolyte may include, for example, at least one selected from the group consisting of $LiNbO_3$, $Li_{1.5}Al_{0.5}Ge_{1.5}(PO_4)_3$, $La_{2/3-x}Li_{3x}TiO_3$, and $Li_7La_3Zr_2O_{12}$. The hydride solid electrolyte may include $LiBH_4$ and/or the like, for example. The nitride solid electrolyte may include $Li_3N$, $Li_3BN_2$, and/or the like, for example.

<<Solid Electrolyte Layer>>

When battery 1000 is an all-solid-state battery, separator 200 includes a solid electrolyte layer. The solid electrolyte layer may have a thickness from 1 to 50 μm, for example.

The solid electrolyte layer includes a solid electrolyte. The solid electrolyte layer may further include a binder, for example. The solid electrolyte of the solid electrolyte layer and that of the electrode active material layer may be the same as one another, or may be different from each other. The solid electrolyte layer may include, for example, at least one selected from the group consisting of a sulfide solid electrolyte, a halide solid electrolyte, an oxide solid electrolyte, a hydride solid electrolyte, and a nitride solid electrolyte. The amount of the binder to be used may be, for example, from 0.1 to 10 parts by mass relative to 100 parts by mass of the solid electrolyte. The binder of the solid electrolyte layer and that of the electrode active material layer may be the same as one another, or may be different from each other.

The solid electrolyte layer may have a monolayer structure, or may have a multilayer structure. For example, the solid electrolyte layer may have a structure of two to five layers. For example, each layer may have a different solid electrolyte. For example, each layer may have a different density. For example, each layer may have a different solid electrolyte particle size (such as D50, for example).

For example, the solid electrolyte layer may include a first layer 210 and a second layer 220. First layer 210 is in contact with first electrode 101. Second layer 220 is in contact with second electrode 102. The ratio of the thickness between first layer 210 and second layer 220 may be "(first layer)/(second layer)=1/9 to 9/1", or "(first layer)/(second layer)=3/7 to 7/3", for example.

The composition of first layer 210 may be different from that of second layer 220. For example, it is possible that first layer 210 includes a sulfide solid electrolyte and second layer 220 includes a halide solid electrolyte. For example, it is possible that first layer 210 includes a halide solid electrolyte and second layer 220 includes a sulfide solid electrolyte. First layer 210 may include both a sulfide solid electrolyte and a halide solid electrolyte. Second layer 220 may include both a sulfide solid electrolyte and a halide solid electrolyte. The volume ratio (a first volume ratio) of the halide solid electrolyte to the sulfide solid electrolyte in first layer 210 may be higher than the volume ratio (a second volume ratio) of the halide solid electrolyte to the sulfide solid electrolyte in second layer 220. The first volume ratio may be less than the second volume ratio.

<Battery Configuration>

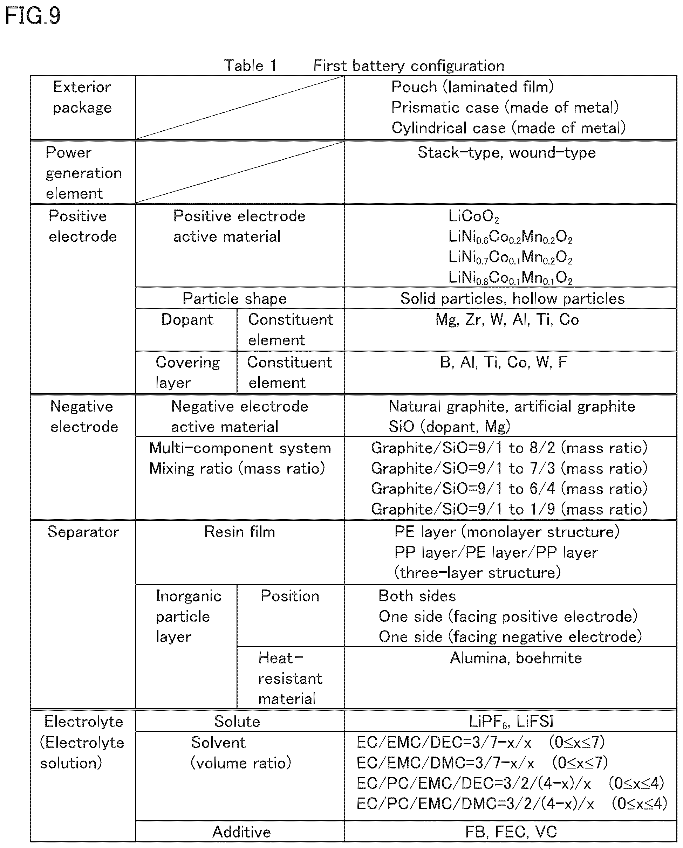

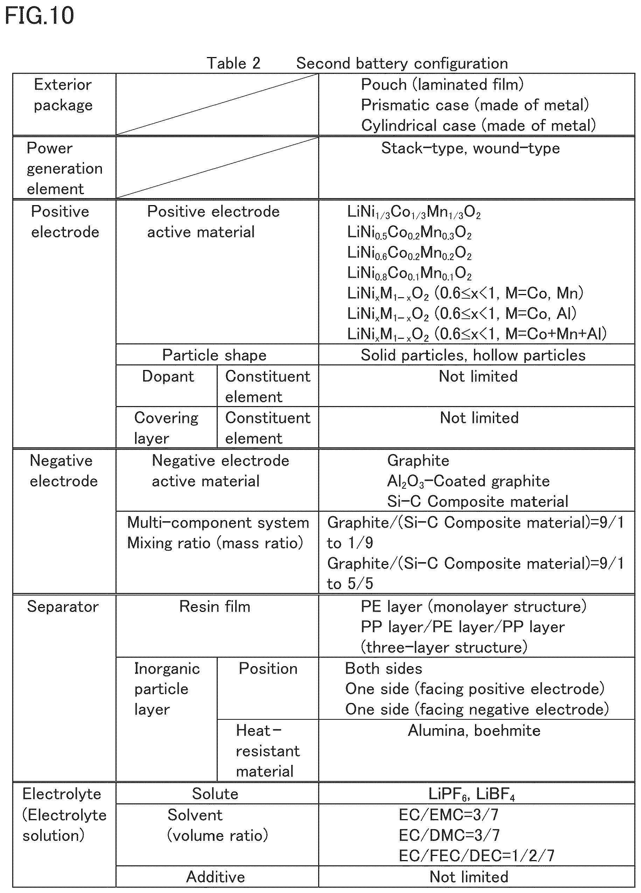

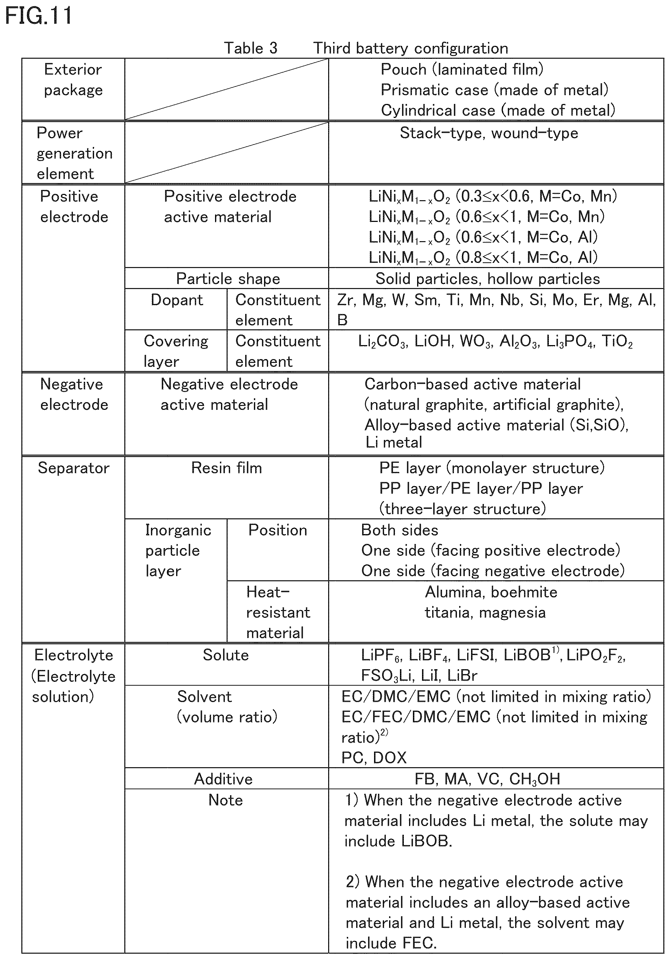

Fig. 9 is Table 1 showing a first battery configuration. Fig. 10 is Table 2 showing a second battery configuration. Fig. 11 is Table 3 showing a third battery configuration. In each table, when a plurality of materials are described in a single cell, this description is intended to mean one of them as well as a combination of them. For example, when materials "α, β, γ" are described in a single cell, this description is intended to mean "at least one selected from the group consisting of α, β, and γ". Certain elements may be extracted from the first to third battery configurations and optionally combined together. Battery 1000 may include the first to third battery configurations, for example.

[Examples]

<<Production of Electrode>>

With the use of production system 20 (see Fig. 2), production of an electrode was attempted. In the following, "length" refers to the dimension in the length direction (in the Y-axis direction). "Width" refers to the dimension in the width direction (in the X-axis direction).

<No. 1>

(a) Preparing Base Sheet

As base sheet 110, an Al foil sheet (40-$\mu$m thick, 251-mm wide) was prepared. With surface-roughening apparatus 21 (at third roll gap G3), discontinuous surface roughening was performed to base sheet 110. In other words, first region 111 and second region 112 were formed. The arithmetic mean roughness of first region 111 (a non-machined area) was 0.05 $\mu$m. The arithmetic mean roughness of second region 112 (a machined area) was from 7.5 to 12.5 $\mu$m. The length of first region 111 was 302 mm. The length of second region 112 was 27 mm. The width of each of first region 111 and second region 112 was 251 mm.

(b) Preparing Active Material Film

(b1) Preparing Wet Powder

In a stirring granulation apparatus, an active material (NCM), a conductive material (CNTs), a binder (PVdF), and liquid (NMP) were mixed together to prepare wet powder 10. The solid concentration of wet powder 10 was 89%. The solid matter blending ratio was "(active material)/(conductive material)/binder=97.3/1.5/1.2 (mass ratio)".

(b2) Forming Film

Wet powder 10 was supplied into first roll gap G1, and thereby active material film 120 (219-mm wide) was formed. The conditions for film forming were as follows.

Film Forming Conditions

First roll gap G1: 220 $\mu$m
Rotational speed of first roll 23a ($\omega$1): 0.75 rpm
Arithmetic mean roughness of first roll 23a: 0 to 10 $\mu$m
Rotational speed of second roll 23b ($\omega$2): 2 rpm
Arithmetic mean roughness of second roll 23b: 0 to 10 $\mu$m

(c) Affixing

Second roll 23b supplied the active material film 120 into second roll gap G2. Transferring apparatus 22 supplied the base sheet 110 into second roll gap G2. At second roll gap G2, active material film 120 was affixed to base sheet 110. Active material film 120 selectively adhered to first region 111. After affixation, active material film 120 had a width of 219 mm and a length of 302 mm.

Affixation Conditions (Transfer Conditions)

Second roll gap G2: 130 $\mu$m
Rotational speed of second roll 23b ($\omega$2): 2 rpm
Rotational speed of third roll 23c ($\omega$3): 5 rpm

<No. 2>

As a mask, adhesive tape made of resin was prepared. The adhesive tape had adhesive material on one side. The mask was affixed to a region (251-mm wide, 27-mm long) of base sheet 110 that corresponded to second region 112. With affixing apparatus 23, active material film 120 was affixed to base sheet 110 in a continuous manner. After affixation, the mask was peeled off, and thereby a non-coated area was formed. After the mask was peeled off, active material film 120 had a width of 219 mm and a length of 302 mm.

<<Evaluation>>

<Shape Precision>

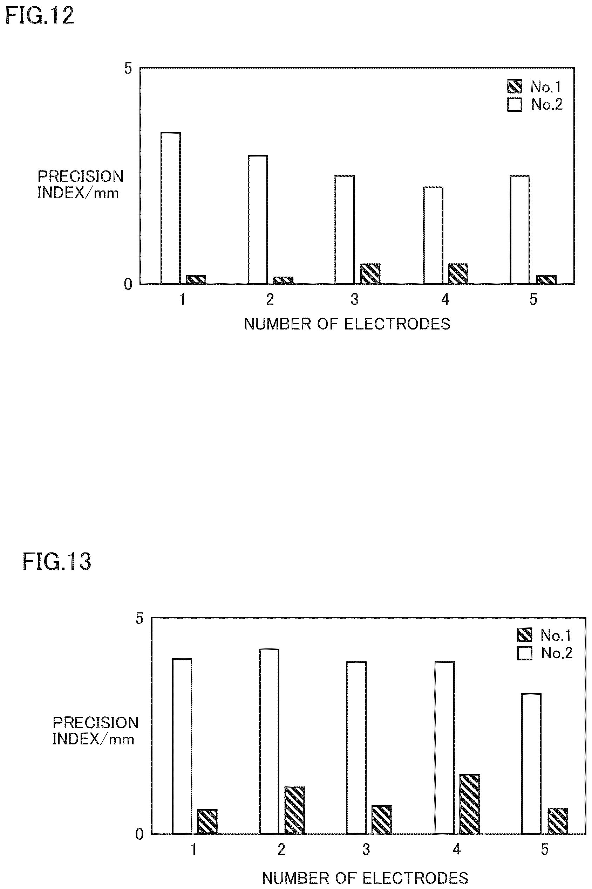

By the production method of No. 1, five electrodes 100 were produced. By the production method of No. 2, five electrodes 100 were produced. Fig. 12 is a first graph showing shape precision. Fig. 13 is a second graph showing shape precision. The first graph shows the precision index of active material film 120 at the starting edge side. The second graph shows the precision index of active material film 120 at the ending edge side. The starting edge is the front edge in the direction in which active material film 120 is transferred in production system 20, and the ending edge is the rear edge in that direction. The smaller the precision index is, the higher the shape precision is considered to be. The shape precision at the ending edge side tends to be small as compared to the starting edge side.

In No. 1, the shape precision was high as compared to No. 2. In No. 1, the precision index was 1.5 mm or less at both the starting edge side and the ending edge side.

<Battery Performance>

A small test battery was produced. The exterior package of the test battery was a pouch made of an Al-laminated film. The test battery of No. 1 includes an electrode produced by the production method of No. 1. The test battery of No. 2 includes an electrode produced by the production method of No. 2. Three test batteries of No. 1 and three test batteries of No. 2 were produced. By an IV method, internal resistance was measured after discharging for 10 seconds and also after charging for 10 seconds. Further, by an IV method, internal resistance was measured after discharging for 0.1 seconds and also after charging for 0.1 seconds. The hour rate of current was 1 C. An hour rate of 1 C is an hour rate at which the rated capacity of the test battery is discharged in one hour.

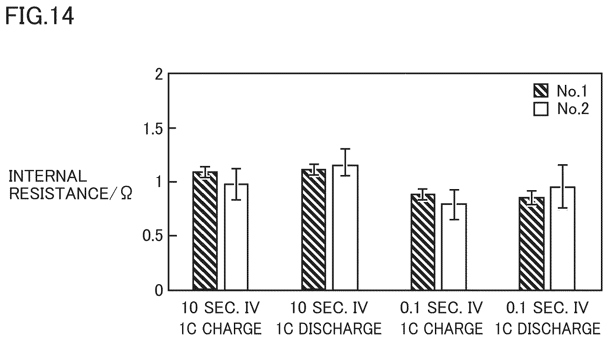

Fig. 14 is a graph showing battery performance. Each bar represents the average value of internal resistance of the three test batteries. The error bars represent variations of internal resistance. The internal resistance of the test battery of No. 1 was equivalent to that of the test battery of No. 2. Therefore, it is conceivable that the influence of second region 112 (a rough surface) of base sheet 110 on battery performance is small.

The error bars for the test battery of No. 1 tend to be shorter than those for the test battery of No. 2. It is conceivable that battery performance is stable due to high shape precision.

REFERENCE SIGNS LIST

1 smooth surface, 2 rough surface, 10 wet powder, 20 production system, 21 surface-roughening apparatus, 21a first surface-roughening roll, 21b second surface-roughening roll, 22 transferring apparatus, 23 affixing apparatus, 23a first roll, 23b second roll, 23c third roll, 24 collecting apparatus, 24a scraper, 24b sucking apparatus, 100 electrode, 101 first electrode, 102 second electrode, 110 base sheet, 110a first main face, 110b second main face, 111 first region, 112 second region, 113 boundary, 120 active material film, 120a upper portion, 120b lower portion, 120e end region, 121 upper surface, 122 side surface, 123 bottom surface, 130 current-collecting member, 200 separator, 210 first layer, 220 second layer, 500 power generation element, 1000 battery, G1 first roll gap, G2 second roll gap, G3 third roll gap, VI region.

**Claims**

1.  A method of producing an electrode, the method comprising:

    (a) preparing a base sheet;
    (b) preparing an active material film; and
    (c) affixing the active material film to the base sheet by passing the base sheet and the active material film through a roll gap, wherein

the base sheet includes a first region and a second region,

an arithmetic mean roughness of the second region is greater than an arithmetic mean roughness of the first region,

the second region is adjacent to the first region, and

in the (c), the active material film adheres selectively to the first region among the first region and the second region.

2. The method of producing an electrode according to claim 1,
wherein a ratio of the arithmetic mean roughness of the second region to the arithmetic mean roughness of the first region is 100 or more.

3. The method of producing an electrode according to claim 1 or 2, wherein the (b) includes:

(b1) preparing wet powder including an active material and a binder; and
(b2) shaping the wet powder into the active material film.

4. The method of producing an electrode according to claim 1 or 2, wherein

the (a) includes carrying out surface roughening of the base sheet to form the second region,
the surface roughening includes pressing a surface-roughening roll against the base sheet, and
a surface of the surface-roughening roll has at least one smooth surface and at least one rough surface.

5. The method of producing an electrode according to claim 1 or 2, wherein

the base sheet has a belt-like planar shape, and
in a length direction of the base sheet, the first region and the second region are alternately positioned.

6. The method of producing an electrode according to claim 1 or 2, further comprising:
(d) joining a current-collecting member to the second region by ultrasonic joining.

7. A production system that produces an electrode by affixing an active material film to a base sheet, the production system comprising:

a surface-roughening apparatus;
a transferring apparatus; and
an affixing apparatus, wherein
the surface-roughening apparatus is configured to carry out surface roughening of a portion of the base sheet,
the transferring apparatus is configured to transfer the base sheet from the surface-roughening apparatus to the affixing apparatus, and
the affixing apparatus is configured to affix the active material film to the base sheet by passing the base sheet and the active material film through a roll gap.

8. The production system according to claim 7, further comprising:

a collecting apparatus, wherein
the collecting apparatus is configured to collect a remainder of the active material film that was not affixed to the base sheet.

9. The production system according to claim 7 or 8, wherein

the surface-roughening apparatus includes a surface-roughening roll, and
a surface of the surface-roughening roll has at least one smooth surface and at least one rough surface.

10. An electrode comprising:

a base sheet;
an active material film; and
a current-collecting member, wherein

the base sheet includes a first region and a second region,
an arithmetic mean roughness of the second region is greater than an arithmetic mean roughness of the first region,
the second region is adjacent to the first region,
the active material film includes an active material and a binder,
the active material film is positioned on the first region, and
the current-collecting member is joined to the second region.

11. The electrode according to claim 10, wherein a relationship of an expression (1-1):

$$Ra_1 < 0.5D < Ra_2 \qquad (1\text{-}1)$$

is satisfied, where
$Ra_1$ represents the arithmetic mean roughness of the first region,
$Ra_2$ represents the arithmetic mean roughness of the second region, and
0.5D represents 0.5 times an average diameter of the active material.

12. The electrode according to claim 11, wherein

the arithmetic mean roughness of the first region is 0.5 $\mu$m or less, and
the arithmetic mean roughness of the second region is from 5 to 15 $\mu$m.

13. The electrode according to any one of claims 10 to 12, wherein in a plan view,

a boundary between the first region and the second region extends in the shape of a straight line,
the active material film includes an end region,
the end region extends along the boundary, and
in a direction orthogonal to the boundary, a largest distance between the end region and the boundary is 1.5 mm or less.

14. The electrode according to claim 13, wherein in a cross-sectional view,

the end region includes an upper surface, a side surface, and a bottom surface,
the bottom surface is in contact with the base sheet,
the upper surface is a surface opposite to the bottom surface,
the side surface connects the bottom surface to the upper surface, and
an angle formed by the side surface and the bottom surface is from 45 to 90 degrees.

15. The electrode according to any one of claims 10 to 12, wherein

the active material film satisfies a relationship of an expression (1-2):

$$0.8 \leq \alpha/\beta \leq 1.5 \qquad (1\text{-}2)$$

where
$\alpha$ represents a mass concentration of a particular element in an upper portion, the particular element is derived from the binder,
$\beta$ represents a mass concentration of the particular element in a lower portion,
the upper portion and the lower portion are defined as two equal parts formed by dividing the active material film into half in a thickness direction, and
the lower portion is located between the upper portion and the base sheet.

FIG.1

```
        START
          │
          ▼
┌─────────────────────────┐  a
│  PREPARE BASE SHEET     │
└─────────────────────────┘
          │
          ▼
┌─────────────────────────┐  b
│  PREPARE ACTIVE         │
│  MATERIAL FILM          │
│   ┌──────────────────┐ b1│
│   │ PREPARE WET POWDER│   │
│   └──────────────────┘   │
│          │               │
│          ▼            b2 │
│   ┌──────────────────┐   │
│   │   FORM FILM      │   │
│   └──────────────────┘   │
└─────────────────────────┘
          │
          ▼
┌─────────────────────────┐  c
│        AFFIX            │
└─────────────────────────┘
          │
          ▼
┌─────────────────────────┐  d
│   ULTRASONIC JOINING    │
└─────────────────────────┘
          │
          ▼
         END
```

FIG.2

FIG.3

110a(110b)

111  112  111  112  111  112

113 113  113 113  113 113

Z ⊙ → Y

X

FIG.4

110
112  111

VI

100

130

113

120

Z ⊙ → Y

X

FIG.5

FIG.6

FIG.7

FIG.8

# FIG.9

Table 1      First battery configuration

| | | |
|---|---|---|
| Exterior package | | Pouch (laminated film)<br>Prismatic case (made of metal)<br>Cylindrical case (made of metal) |
| Power generation element | | Stack-type, wound-type |
| Positive electrode | Positive electrode active material | $LiCoO_2$<br>$LiNi_{0.6}Co_{0.2}Mn_{0.2}O_2$<br>$LiNi_{0.7}Co_{0.1}Mn_{0.2}O_2$<br>$LiNi_{0.8}Co_{0.1}Mn_{0.1}O_2$ |
| | Particle shape | Solid particles, hollow particles |
| | Dopant / Constituent element | Mg, Zr, W, Al, Ti, Co |
| | Covering layer / Constituent element | B, Al, Ti, Co, W, F |
| Negative electrode | Negative electrode active material | Natural graphite, artificial graphite<br>SiO (dopant, Mg) |
| | Multi-component system Mixing ratio (mass ratio) | Graphite/SiO=9/1 to 8/2 (mass ratio)<br>Graphite/SiO=9/1 to 7/3 (mass ratio)<br>Graphite/SiO=9/1 to 6/4 (mass ratio)<br>Graphite/SiO=9/1 to 1/9 (mass ratio) |
| Separator | Resin film | PE layer (monolayer structure)<br>PP layer/PE layer/PP layer<br>(three-layer structure) |
| | Inorganic particle layer / Position | Both sides<br>One side (facing positive electrode)<br>One side (facing negative electrode) |
| | Heat-resistant material | Alumina, boehmite |
| Electrolyte (Electrolyte solution) | Solute | $LiPF_6$, LiFSI |
| | Solvent (volume ratio) | EC/EMC/DEC=3/7−x/x   $(0 \leq x \leq 7)$<br>EC/EMC/DMC=3/7−x/x   $(0 \leq x \leq 7)$<br>EC/PC/EMC/DEC=3/2/(4−x)/x   $(0 \leq x \leq 4)$<br>EC/PC/EMC/DMC=3/2/(4−x)/x   $(0 \leq x \leq 4)$ |
| | Additive | FB, FEC, VC |

# FIG.10

Table 2    Second battery configuration

| Exterior package | | | Pouch (laminated film)<br>Prismatic case (made of metal)<br>Cylindrical case (made of metal) |
|---|---|---|---|
| Power generation element | | | Stack-type, wound-type |
| Positive electrode | Positive electrode active material | | $LiNi_{1/3}Co_{1/3}Mn_{1/3}O_2$<br>$LiNi_{0.5}Co_{0.2}Mn_{0.3}O_2$<br>$LiNi_{0.6}Co_{0.2}Mn_{0.2}O_2$<br>$LiNi_{0.8}Co_{0.1}Mn_{0.1}O_2$<br>$LiNi_xM_{1-x}O_2$ (0.6≤x<1, M=Co, Mn)<br>$LiNi_xM_{1-x}O_2$ (0.6≤x<1, M=Co, Al)<br>$LiNi_xM_{1-x}O_2$ (0.6≤x<1, M=Co+Mn+Al) |
| | Particle shape | | Solid particles, hollow particles |
| | Dopant | Constituent element | Not limited |
| | Covering layer | Constituent element | Not limited |
| Negative electrode | Negative electrode active material | | Graphite<br>$Al_2O_3$-Coated graphite<br>Si-C Composite material |
| | Multi-component system Mixing ratio (mass ratio) | | Graphite/(Si-C Composite material)=9/1 to 1/9<br>Graphite/(Si-C Composite material)=9/1 to 5/5 |
| Separator | Resin film | | PE layer (monolayer structure)<br>PP layer/PE layer/PP layer (three-layer structure) |
| | Inorganic particle layer | Position | Both sides<br>One side (facing positive electrode)<br>One side (facing negative electrode) |
| | | Heat-resistant material | Alumina, boehmite |
| Electrolyte (Electrolyte solution) | Solute | | $LiPF_6$, $LiBF_4$ |
| | Solvent (volume ratio) | | EC/EMC=3/7<br>EC/DMC=3/7<br>EC/FEC/DEC=1/2/7 |
| | Additive | | Not limited |

# FIG.11

Table 3    Third battery configuration

| | | | |
|---|---|---|---|
| Exterior package | | | Pouch (laminated film)<br>Prismatic case (made of metal)<br>Cylindrical case (made of metal) |
| Power generation element | | | Stack-type, wound-type |
| Positive electrode | Positive electrode active material | | $LiNi_xM_{1-x}O_2$ (0.3≤x<0.6, M=Co, Mn)<br>$LiNi_xM_{1-x}O_2$ (0.6≤x<1, M=Co, Mn)<br>$LiNi_xM_{1-x}O_2$ (0.6≤x<1, M=Co, Al)<br>$LiNi_xM_{1-x}O_2$ (0.8≤x<1, M=Co, Al) |
| | Particle shape | | Solid particles, hollow particles |
| | Dopant | Constituent element | Zr, Mg, W, Sm, Ti, Mn, Nb, Si, Mo, Er, Mg, Al, B |
| | Covering layer | Constituent element | $Li_2CO_3$, LiOH, $WO_3$, $Al_2O_3$, $Li_3PO_4$, $TiO_2$ |
| Negative electrode | Negative electrode active material | | Carbon-based active material<br>(natural graphite, artificial graphite),<br>Alloy-based active material (Si,SiO),<br>Li metal |
| Separator | Resin film | | PE layer (monolayer structure)<br>PP layer/PE layer/PP layer<br>(three-layer structure) |
| | Inorganic particle layer | Position | Both sides<br>One side (facing positive electrode)<br>One side (facing negative electrode) |
| | | Heat-resistant material | Alumina, boehmite<br>titania, magnesia |
| Electrolyte (Electrolyte solution) | Solute | | $LiPF_6$, $LiBF_4$, LiFSI, LiBOB[1], $LiPO_2F_2$,<br>$FSO_3Li$, LiI, LiBr |
| | Solvent (volume ratio) | | EC/DMC/EMC (not limited in mixing ratio)<br>EC/FEC/DMC/EMC (not limited in mixing ratio)[2]<br>PC, DOX |
| | Additive | | FB, MA, VC, $CH_3OH$ |
| | Note | | 1) When the negative electrode active material includes Li metal, the solute may include LiBOB.<br><br>2) When the negative electrode active material includes an alloy-based active material and Li metal, the solvent may include FEC. |

FIG.12

FIG.13

FIG.14

EP 4 645 444 A1

## INTERNATIONAL SEARCH REPORT

International application No.

**PCT/JP2023/039888**

### A. CLASSIFICATION OF SUBJECT MATTER

**H01M 4/139**(2010.01)i; **H01M 4/13**(2010.01)i; **H01M 4/64**(2006.01)i; **H01M 4/66**(2006.01)i; **H01M 4/70**(2006.01)i; **H01M 50/531**(2021.01)i; **H01M 50/536**(2021.01)i
FI: H01M4/139; H01M4/66 A; H01M50/531; H01M50/536; H01M4/13; H01M4/64 A; H01M4/70 A

According to International Patent Classification (IPC) or to both national classification and IPC

### B. FIELDS SEARCHED

Minimum documentation searched (classification system followed by classification symbols)

H01M4/139; H01M4/13; H01M4/64; H01M4/66; H01M4/70; H01M50/531; H01M50/536

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| Y | JP 2022-141439 A (PRIME PLANET ENERGY & SOLUTIONS INC.) 29 September 2022 (2022-09-29) claims 1-5, paragraph [0051], fig. 4 | 1, 3-4, 6 |
| A | | 2, 7-15 |
| X | JP 2008-282797 A (PANASONIC CORPORATION) 20 November 2008 (2008-11-20) claim 1, example 2, fig. 3 | 10-11, 13-14 |
| Y | | 1, 3-9, 15 |
| Y | JP 2014-154363 A (TOYOTA JIDOSHA KABUSHIKI KAISHA) 25 August 2014 (2014-08-25) paragraph [0049], fig. 15 | 4, 7-9 |
| Y | JP 2011-151143 A (MITSUBISHI ELECTRIC CORPORATION) 04 August 2011 (2011-08-04) claims 1-3, fig. 2 | 4, 7-9 |

[✓] Further documents are listed in the continuation of Box C.    [✓] See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **04 January 2024** | **23 January 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (July 2022)

## INTERNATIONAL SEARCH REPORT

| International application No. |
| --- |
| **PCT/JP2023/039888** |

**C.    DOCUMENTS CONSIDERED TO BE RELEVANT**

| Category* | Citation of document, with indication, where appropriate, of the relevant passages | Relevant to claim No. |
| --- | --- | --- |
| Y | JP 08-250110 A (DAI NIPPON PRINTING CO., LTD.) 27 September 1996 (1996-09-27) example 1, fig. 3-4 | 1, 3-5, 7-9 |
| Y | JP 2017-027849 A (TOYOTA JIDOSHA KABUSHIKI KAISHA) 02 February 2017 (2017-02-02) claim 1, examples 1-3, table 1, fig. 2 | 1, 3-5, 7-9 |
| Y | JP 2016-152066 A (TOYOTA JIDOSHA KABUSHIKI KAISHA) 22 August 2016 (2016-08-22) examples, table 1 | 15 |
| Y | JP 2013-225440 A (TOYOTA JIDOSHA KABUSHIKI KAISHA) 31 October 2013 (2013-10-31) examples 1-4, table 2 | 15 |
| A | JP 2016-225020 A (DENSO CORPORATION) 28 December 2016 (2016-12-28) entire text, all drawings | 1-15 |
| A | JP 2014-102886 A (TOYOTA JIDOSHA KABUSHIKI KAISHA) 05 June 2014 (2014-06-05) entire text, all drawings | 1-15 |

Form PCT/ISA/210 (second sheet) (July 2022)

**INTERNATIONAL SEARCH REPORT**
Information on patent family members

International application No.

**PCT/JP2023/039888**

| Patent document cited in search report | | | Publication date (day/month/year) | Patent family member(s) | | | Publication date (day/month/year) |
|---|---|---|---|---|---|---|---|
| JP | 2022-141439 | A | 29 September 2022 | US 2022/0294020 A1 claims 1-5, paragraph [0076], fig. 4 CN 115084426 A | | | |
| JP | 2008-282797 | A | 20 November 2008 | (Family: none) | | | |
| JP | 2014-154363 | A | 25 August 2014 | US 2015/0372338 A1 paragraph [0072], fig. 15 WO 2014/122847 A1 CN 104981935 A | | | |
| JP | 2011-151143 | A | 04 August 2011 | (Family: none) | | | |
| JP | 08-250110 | A | 27 September 1996 | (Family: none) | | | |
| JP | 2017-027849 | A | 02 February 2017 | (Family: none) | | | |
| JP | 2016-152066 | A | 22 August 2016 | US 2016/0240839 A1 examples, table 1 KR 10-2016-0100831 A CN 105895852 A | | | |
| JP | 2013-225440 | A | 31 October 2013 | (Family: none) | | | |
| JP | 2016-225020 | A | 28 December 2016 | (Family: none) | | | |
| JP | 2014-102886 | A | 05 June 2014 | (Family: none) | | | |

Form PCT/ISA/210 (patent family annex) (July 2022)

42

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2012228649 A